# EUROPEAN PATENT APPLICATION

(11) **EP 4 451 599 A1**
(43) Date of publication of application: **23.10.2024**
(21) Application number: 24166590.0
(22) Date of filing: 26.03.2024
(51) Int. Cl.: H04L 5/00, H04W 72/0453

(54) **DEVICE AND METHOD FOR COMMUNICATION BASED ON MULTI-RESOURCE UNIT IN WIRELESS LOCAL AREA NETWORK SYSTEM**

(30) Priority: 31.03.2023 US 202363456205 P; 01.06.2023 KR 20230071007
(71) Applicant: Samsung Electronics Co., Ltd., Suwon-si, Gyeonggi-do 16677 (KR)
(72) Inventor: KIM, Myeongjin, 16677 Suwon-si (KR); LEE, Wookbong, 16677 Suwon-si (KR); KIM, Jinmin, 16677 Suwon-si (KR); JEON, Eunsung, 16677 Suwon-si (KR)
(74) Representative: Marks & Clerk LLP

(57) **Abstract**

A wireless communication method of a first device, includes: receiving, from a second device through a channel having a bandwidth of 20 megahertz, a physical layer protocol data unit (PPDU), based on a non-orthogonal frequency-division multiple access (non-OFDMA); based on values of a plurality of fields being related to resource allocation of the channel and included in a signal field of a preamble included in the PPDU, identifying whether a multi-resource unit (MRU) to replace a resource unit (RU) including a 242-tone is allocated to the first device; and based on a result of the identifying, decoding a payload included in the PPDU.

## Description

### BACKGROUND

The present disclosure relates to wireless communications, and more particularly, to devices and methods for communication based on a multi-resource unit (MRU) in a wireless local area network (WLAN) system.

As an example of wireless communication, a wireless local area network (WLAN) may refer to a technology for connecting two or more devices to each other by using a wireless signal transmission method. For example, the WLAN technology may be based on the Institute of Electrical and Electronics Engineers (IEEE) 802.11 standard. The 802.11 standard has evolved into several versions (e.g., 802.11b, 802.11a, 802.11g, 802.11n, 802.11ac, 802.11ax, and the like), which may support a transmission rate of up to 1 gigabyte/second based on orthogonal frequency-division multiplexing (OFDM).

In a WLAN based on the IEEE 802.11ac standard, data may be simultaneously transmitted to a plurality of users through multiple-user, multiple-input, and multiple-output (MU-MIMO) technology. In another WLAN based on the IEEE 802.1 1ax standard, which may also be referred to as high efficiency (HE), both MU-MIMO and OFDM access (OFDMA) may be applied to divide and provide usable subcarriers to users, thereby implementing multiple access. Accordingly, WLAN systems to which the IEEE 802.1 1ax standard has been applied may effectively support communication in dense areas and/or outdoors.

The IEEE 802.11be standard, which may also be referred to as extremely high throughput (EHT), may implement support of a 6 gigahertz (GHz) unlicensed frequency band, utilization of a bandwidth of maximum 320 MHz per channel, introduction of hybrid automatic repeat and request (HARQ), support of maximum 16×16 MIMO, and the like. Accordingly, next generation WLAN systems may be expected to provide support for features such as, but not limited to, low-latency and ultra-high-speed transmission, that may be supported by other wireless communication systems, such as, fifth generation (5G), New Radio (NR), and the like.

For example, support for a bandwidth of up to 640 megahertz (MHz) per channel in 802.11be has been proposed to be included in a next generation of EHT, which may also be referred to as UHR, by an UHR study group (SG) in order to potentially increase spectrum efficiency and/or transmission rate.

### SUMMARY

Example embodiments of the present disclosure provide a device and method for allocating multi-resource units (MRUs) to minimize communication performance degradation that may be caused by a hardware limitation of an apparatus in a particular bandwidth in a wireless local area network (WLAN) system.

According to an embodiment, a wireless communication method of a first device, includes: receiving, from a second device through a channel having a bandwidth of 20 megahertz (MHz), a physical layer protocol data unit (PPDU), based on a non-orthogonal frequency-division multiple access (non-OFDMA); based on values of a plurality of fields being related to resource allocation of the channel and included in a signal field of a preamble included in the PPDU, identifying whether a multi-resource unit (MRU) to replace a resource unit (RU) including a 242-tone is allocated to the first device; and based on a result of the identifying, decoding a payload included in the PPDU.

According to an an embodiment, a wireless communication method of a second device for communicating with a first device, including: allocating, to the first device, a first multi-resource unit (MRU) to replace a resource unit (RU) including a 242-tone; generating a field indicating that the first MRU is allocated to the first device; and transmitting, to the first device through a channel having a bandwidth of 20 megahertz (MHz), a physical layer protocol data unit (PPDU) including the field, based on a non-orthogonal frequency-division multiple access (non-OFDMA).

According to an embodiment, a first device configured to communicate with at least one second device in a wireless local area network (WLAN) system, includes: a transceiver configured to receive, from the at least one second device through a channel having a bandwidth of 20 megahertz (MHz), a physical layer protocol data unit (PPDU) according to non-orthgonal frequency-division multiple access (non-OFDMA); and a signal processor configured to: based on values of a plurality of fields being related to resource allocation of the channel and included in a signal field of a preamble included in the PPDU, identify whether a multi-resource unit (MRU) to replace a resource unit (RU) including a 242-tone is allocated to the first device, and based on a result of the identifying, decode a payload included in the PPDU.

According to an embodiment, a second device configured to communicate with a first device in a wireless local area network (WLAN) system, includes: a signal processor configured to: allocate, to the first device, a first multi-resource unit (MRU) to replace a resource unit (RU) including a 242-tone, and generate a physical layer protocol data unit (PPDU) based on non-orthogonal frequency-division multiple access (non-OFDMA), the PPDU including a field indicating that the first MRU is allocated to the first device; and a transceiver configured to transmit the PPDU to the first device through a channel having a bandwidth of 20 megahertz (MHz).

At least some of the above and other features of the invention are set out in the claims.

### BRIEF DESCRIPTION OF THE DRAWINGS

The above and other aspects, features, and advantages of certain embodiments of the present disclosure may be more apparent from the following description taken in conjunction with the accompanying drawings, in which:
FIG. 1 is a diagram illustrating a wireless communication system according to an embodiment;
FIG. 2 is a block diagram illustrating a wireless communication system, according to an embodiment;
FIGS. 3A and 3B are diagrams illustrating examples of the sizes, positions, and indices of resource units (RUs) usable in a 20-MHz physical layer protocol data unit (PPDU), according to an embodiment;
FIG. 3C is a diagram illustrating communication performance degradation that may be caused by hardware limitations of an station (STA) when an RU consisting of 242-tone in a 20-MHz bandwidth configuration and a non-orthogonal frequency-division multiple access (non-OFDMA) configuration is allocated to the STA, according to an embodiment;
FIGS. 4 to 6B are diagrams depicting configuration examples of multi-resource units (MRUs), according to an embodiment;
FIG. 7 is a flowchart illustrating an operation method of a wireless communication system, according to an embodiment;
FIG. 8 is a diagram illustrating a PPDU, according to an embodiment;
FIG. 9 is a diagram illustrating a universal signal (U-SIG) field, according to an embodiment;
FIGS. 10A to 10C are diagrams depicting fields for identifying whether an MRU is allocated, according to an embodiment;
FIGS. 11A and 11B are diagrams illustrating fields for identifying whether an MRU is allocated, according to an embodiment;
FIGS. 12A and 12B are diagrams depicting fields for identifying whether an MRU is allocated, according to an embodiment;
FIGS. 13A and 13B are diagrams illustrating fields for identifying whether an MRU is allocated, according to an embodiment;
FIGS. 14A and 14B are diagrams depicting fields for identifying whether an MRU is allocated, according to an embodiment;
FIG. 15 is a flowchart illustrating an operation method of a wireless communication system, according to an embodiment;
FIG. 16A is a diagram illustrating an extremely high throughput (EHT) capabilities element format for transmitting capability information of an STA to an access point (AP), according to an embodiment;
FIG. 16B is a diagram illustrating an EHT physical (PHY) Capabilities Information field including capability information indicating whether an MRU is supportable, according to an embodiment;
FIG. 17A is a diagram depicting a detailed implementation example of the Support MRU in 20 MHz bandwidth (BW) subfield of FIG. 16B, according to an embodiment;
FIG. 17B is a diagram illustrating the implementation example of FIG. 17A, according to an embodiment;
FIG. 18A is a diagram depicting a detailed implementation example of the Support MRU in 20 MHz BW subfield of FIG. 16B, according to an embodiment;
FIG. 18B is a diagram illustrating the implementation example of FIG. 18A, according to an embodiment;
FIG. 19A is a diagram depicting a detailed implementation example of the Support MRU in 20 MHz BW subfield of FIG. 16B, according to an embodiment;
FIG. 19B is a diagram illustrating the implementation example of FIG. 19A, according to an embodiment;
FIG. 20A is a diagram depicting a detailed implementation example of the Support MRU in 20 MHz BW subfield of FIG. 16B, according to an embodiment;
FIG. 20B is a diagram illustrating the implementation example of FIG. 20A, according to an embodiment;
FIG. 21A is a diagram depicting a detailed implementation example of the Support MRU in 20 MHz BW subfield of FIG. 16B, according to an embodiment;
FIG. 21B is a diagram illustrating the implementation example of FIG. 21A, according to an embodiment;
FIG. 22A is a diagram depicting a detailed implementation example of the Support MRU in 20 MHz BW subfield of FIG. 16B, according to an embodiment;
FIG. 22B is a diagram illustrating the implementation example of FIG. 22A, according to an embodiment; and
FIG. 23 is a diagram illustrating examples of a device for wireless communication, according to an embodiment.

### DETAILED DESCRIPTION

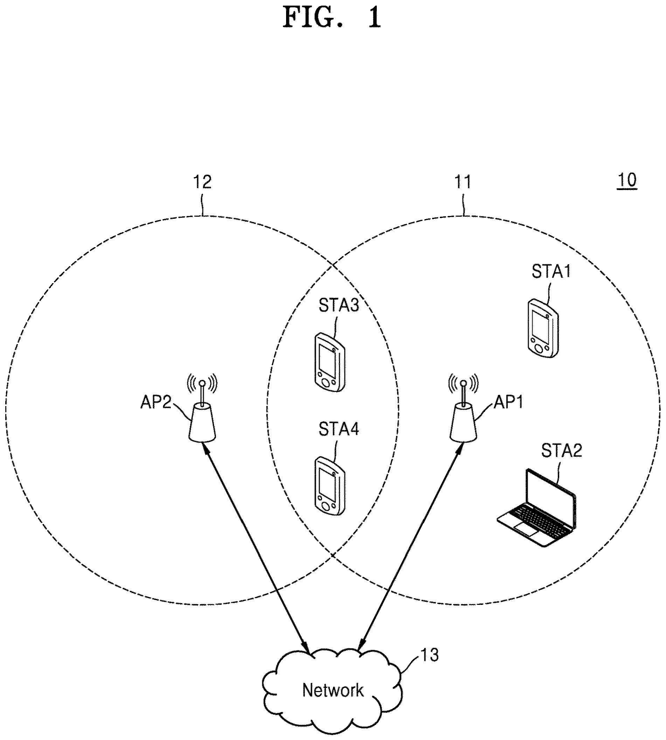

FIG. 1 is a diagram illustrating a wireless communication system 10, according to an embodiment. Referring to FIG. 1, a wireless local area network (WLAN) system is illustrated as an example of the wireless communication system 10.

As described herein, the wireless communication system 10 may be and/or may include a wireless communication system based on an Institute of Electrical and Electronics Engineers (IEEE) 802.11 standard, and/or may perform orthogonal frequency-division multiplexing (OFDM) and/or OFDM access (OFDMA). However, the present disclosure is not limited in this regard. For example, embodiments described herein may also be applied to other communication systems with a similar technological background and channel type (e.g., a cellular communication system such as, but not limited to, Long-Term evolution (LTE), LTE-Advanced (LTE-A), fifth generation (5G), new radio (NR), wireless broadband (WiBro), or global system for mobile communications (GSM), or a short-range communication such as Bluetooth^{™}, Bluetooth Low Energy (BLE), or near-field communication (NFC)) without departing from the scope of the present disclosure.

In addition, various functions described below may be implemented or supported by artificial intelligence technology or one or more computer programs. Each of the computer programs may be configured with and/or composed by computer-readable program code and/or may be implemented in a computer-readable medium. The terms "application" and "program" may refer to one or more computer programs, software components, sets of instructions, procedures, functions, objects, classes, instances, relevant data, or a portion thereof adapted for implementation of suitable computer-readable program code. The phrase "computer-readable program code" may include any type of computer code, including source code, object code, and executable code. The phrase "computer readable medium" may include any type of medium capable of being accessed by a computer, such as, but not limited to, read-only memory (ROM), random-access memory (RAM), a hard disk drive, a compact disc (CD), a digital video disc (DVD), or any other type of memory. A "non-transitory" computer-readable medium may exclude wired, wireless, optical, or other communication links that transmit transitory electrical and/or other signals. A non-transitory computer-readable medium may include media where data may be permanently stored and media where data may be stored and later overwritten, such as, but not limited to, a rewritable optical disc and/or an erasable memory device.

In various embodiments described below, a hardware approach may be described as an example. However, the various embodiments may include a technology using both hardware and software, and thus, may not exclude a software-based approach.

Hereinafter, terms indicating control information, terms indicating entry, terms indicating network entities, terms indicating messages, and/or terms indicating components of a device may be by way of example and for convenience of description. Accordingly, the present disclosure is not limited to the terms used herein, and may use other terms having technically identical meaning.

Referring to FIG. 1, the wireless communication system 10 may include a first access point AP1, a second access point AP2, a first station STA1, a second station STA2, a third station STA3, and a fourth station STA4. The first and second access points AP1 and AP2 may access a network 13 that may include, but not be limited to, an Internet network, an internet protocol (IP) network, or any other network. The first access point AP1 may provide the first station STA1, the second station STA2, the third station STA3, and the fourth station STA4 with access to the network 13, within a first coverage area 11, and the second access point AP2 may provide the third and fourth stations STA3 and STA4 with access to the network 13, within a second coverage area 12. In some embodiments, the first and second access points AP1 and AP2 may communicate with at least one of the first station STA1, the second station STA2, the third station STA3, and the fourth station STA4, based on a wireless communication technology such as, but not limited to, a Institute of Electrical and Electronics Engineers (IEEE) 802.11 standard, Wireless Fidelity (Wi-Fi), or any other WLAN access technology.

An access point (AP) may be referred to as a router, a gateway, or the like, and a station (STA) may be referred to as a mobile station, a subscriber station, a terminal, a mobile terminal, a wireless terminal, user equipment, a user, or the like. The station may be and/or may include a mobile device such as, but not limited to, a mobile phone, a laptop computer, or a wearable device. Alternatively or additionally, the station may be and/or may include a stationary device such as, but not limited to, a desktop computer, a smart television (TV), or the like. In an embodiment, the station may be referred to as a first device. In an optional or additional embodiment, the access point may be referred to as a second device.

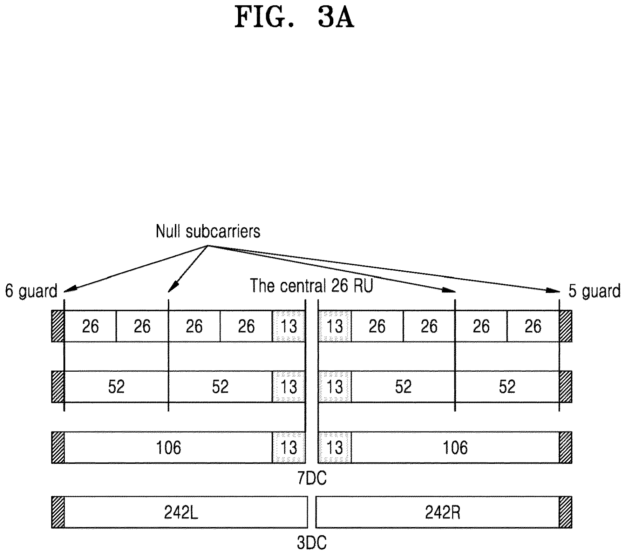

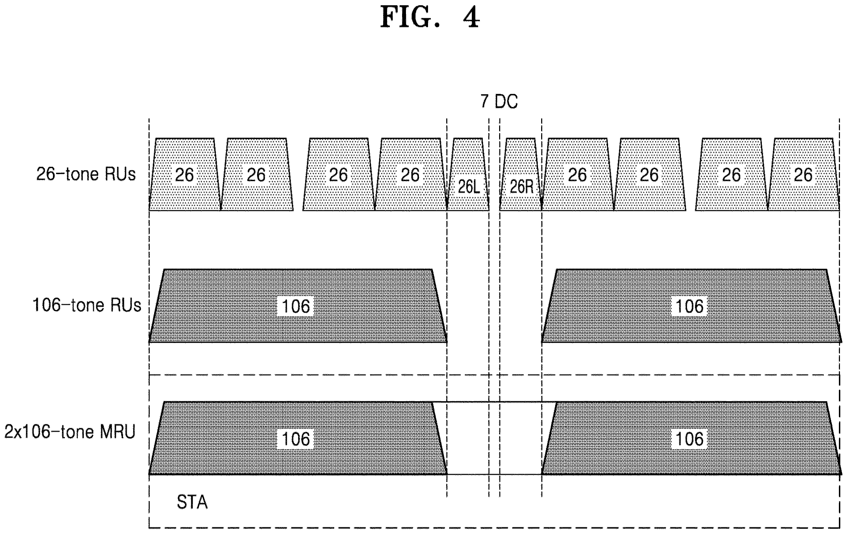

In an embodiment, an access point may allocate any one of a single resource unit (RU) and a multi-resource unit (MRU) to a station, when transmitting a physical layer protocol data unit (PPDU) to a station through a channel of a particular bandwidth (e.g., 20 megahertz (MHz)), according to non-orthogonal frequency-division multiplexing access (non-OFDMA). The MRU in the PPDU, according to a particular configuration (e.g., a configuration of a particular bandwidth and non-OFDMA), may replace a single RU, and may be composed of a combination of RUs considering hardware limitations of the station. Configuration examples of the MRU are described with reference to FIGS. 4 to 6B. The present disclosure may be mainly described based on a particular bandwidth being 20 MHz. However, this particular bandwidth may only be used as an example embodiment. Thus, it may be understood that the present disclosure is applicable to various bandwidths in which performance degradation may occur due to a hardware limitation of a station when a single resource unit is allocated. Examples of hardware limitations of a station are described with reference to FIGS. 3A to 3C.

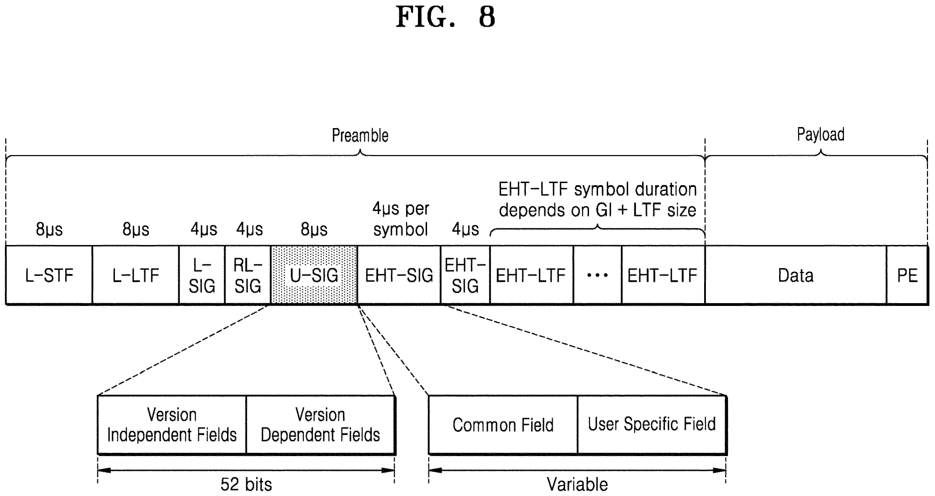

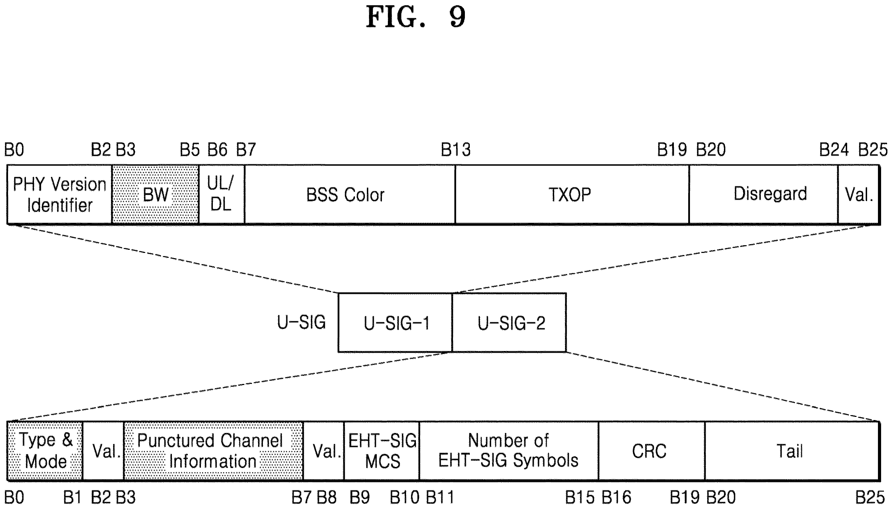

In an embodiment, signal fields of a preamble of a PPDU, according to non-OFDMA in a bandwidth of 20 MHz, may include a first field indicating the bandwidth of 20 MHz, a second field indicating non-OFDMA, and a third field indicating whether an MRU is allocated. In an embodiment, the format of the PPDU may conform to a format described in an IEEE 801.11be standard, and the third field may be defined by using an existing field among fields of the format of the PPDU and/or by using a reserved field of the format of the PPDU. The first to third fields are described below with reference to FIGS. 8 and 9.

In an embodiment, the access point may allocate at least one MRU to a PPDU according to a 20-MHz bandwidth non-OFDMA. In some embodiments, the number of MRUs allocable by the access point may be determined to match a communications standard (e.g., IEEE 801.11be).

For example, when the access point allocates one MRU to a station, the access point may generate a third field indicating whether any one of a single RU and the MRU is allocated to the station. For another example, when the access point allocates a plurality of MRUs to a station, the access point may generate a third field indicating whether any one of a single RU and the plurality of MRUs is allocated to the station.

In an embodiment, the station may receive the PPDU, extract a plurality of fields of the signal fields of the preamble of the PPDU, and identify, based on values of the plurality of fields, whether a bandwidth of 20 MHz is configured, whether non-OFDMA is configured, and/or whether an MRU is allocated. The station may decode the payload of the PPDU, based on a result of the identifying.

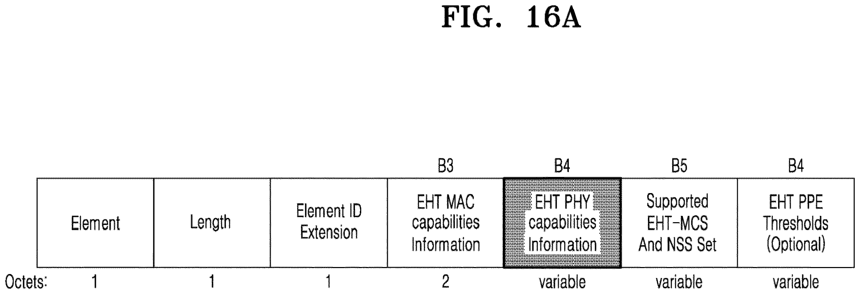

In an embodiment, the station may transmit, to the access point, capability information that directly and/or indirectly indicates whether an MRU in a PPDU, according to non-OFDMA in a bandwidth of 20 MHz, is supportable. In the present disclosure, that an MRU is supportable may refer to an STA being able to perform an operation of receiving data through the MRU and processing the received data. Examples of operations of receiving data through the MRU and processing the received data are described below with reference to FIGS. 16A to 22B.

In an embodiment, the access point may determine, based on the capability information received from the station, whether to allocate an MRU of a PPDU according to the 20-MHz bandwidth non-OFDMA.

The access point, according to an embodiment, may allocate, to the station, an MRU that replaces a single RU in a particular communication environment, and transmit, to the station, a PPDU including a field effectively indicating the allocation, thereby potentially preventing communication performance degradation due to hardware limitations of the station in the particular communication environment.

The station, according to an embodiment, may accurately identify, from the field included in the PPDU, whether the MRU has been allocated, and decode the PPDU based on a result of the identifying, thereby potentially improving communication performance.

Alternatively or additionally, the station, according to an embodiment, may provide the access point with the capability information directly or indirectly indicating whether an MRU is supported in a particular configuration, so as to actively assist the access point in performing an operation of allocating the MRU to the station, thereby potentially minimizing unnecessary trials and errors.

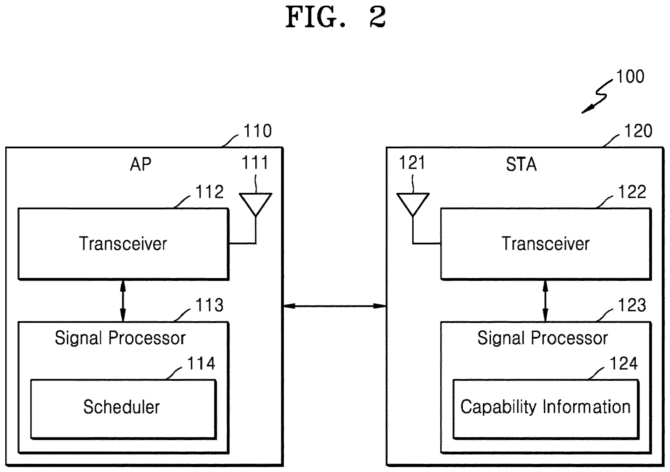

FIG. 2 is a block diagram illustrating a wireless communication system 100, according to an embodiment. Referring to FIG. 2, the block diagram illustrates an access point (AP) 110 and a station (STA) 120 communicating with each other in the wireless communication system 100. Each of the AP 110 and the STA 120 of FIG. 2 may be any device that may perform communication in the wireless communication system 100, and may be referred to as a device for wireless communication. In some embodiments, the AP 110 may be any one of a plurality of APs included in AP multi-link devices (MLDs), and the STA 120 may be any one of a plurality of STAs included in non-AP MLDs.

Referring to FIG. 2, the AP 110 may include an antenna 111, a transceiver 112, and a signal processor 113. In some embodiments, the antenna 111, the transceiver 112, and the signal processor 113 may be included in one package and/or may be included in different packages, respectively. The STA 120 may also include an antenna 121, a transceiver 122, and a signal processor 123. The STA 120 of FIG. 2 may include or may be similar in many respects to at least one of the first to fourth stations STA1 to STA4 described above with reference to FIG. 1, and may include additional features not mentioned above. Furthermore, the AP 110 of FIG. 2 may include or may be similar in many respects to at least one of the first and second access points AP1 and AP2 described above with reference to FIG. 1, and may include additional features not mentioned above. Thus, descriptions of features of the AP 110 and the STA 120 already described above with reference to FIG. 1 may be omitted.

The antenna 111 may receive a signal from the STA 120 and provide the signal to the transceiver 112, and may transmit, to the STA 120, a signal provided from the transceiver 112. In some embodiments, the antenna 111 may include a plurality of antennas for multiple-input and multiple-output (MIMO). In some embodiments, the antenna 111 may include a phased array for beamforming.

The transceiver 112 may process a signal received from the STA 120 through the antenna 111, and provide the processed signal to the signal processor 113. Also, the transceiver 112 may process a signal provided from the signal processor 113 and output the processed signal through the antenna 111. In some embodiments, the transceiver 112 may include an analog circuit such as, but not limited to, a low-noise amplifier, a mixer, a filter, a power amplifier, an oscillator, and the like. In some embodiments, the transceiver 112 may process a signal received from the antenna 111 and/or a signal received from the signal processor 113, under control by the signal processor 113.

The signal processor 113 may process a signal received from the transceiver 112 to extract information transmitted by the STA 120. For example, the signal processor 113 may extract information by demodulating and/or decoding a signal received from the transceiver 112. Alternatively or additionally, the signal processor 113 may generate a signal (e.g., a PPDU) including information to be transmitted to the STA 120, and provide the signal to the transceiver 112. For example, the signal processor 113 may provide the transceiver 112 with a signal generated by encoding and/or modulating data to be transmitted to the STA 120. In some embodiments, the signal processor 113 may be and/or may include a programmable component such as, but not limited to, a central processing unit (CPU) or a digital signal processor (DSP), may include a reconfigurable component such as a field-programmable gate array (FPGA), and may include a component configured to provide a fixed function, such as an intellectual property (IP) core. In some embodiments, the signal processor 113 may include a memory that stores data and/or a series of instructions, and/or may access such a memory. As used herein, the AP 110 performing operations may refer to the transceiver 112 and/or the signal processor 113 performing the operations. Accordingly, operations performed by the AP 110 may be performed by the transceiver 112 and/or the signal processor 113, and operations performed by the STA 120 may be performed by the transceiver 122 and/or the signal processor 123 included in the STA 120.

The signal processor 113 of the AP 110 may include a scheduler 114. In an embodiment, the scheduler 114 may allocate any one of a single RU and an MRU to the STA 120, in a particular configuration related to a PPDU (e.g., a configuration of a bandwidth of 20 MHz and a configuration of non-OFDMA). As described above, the MRU may replace a single RU and/or may be composed of a combination of RUs to potentially avoid degradation of communication performance due to hardware limitations of the STA 120 in a particular configuration.

In an embodiment, the scheduler 114 may generate at least one field indicating whether an MRU has been allocated to the STA 120. The PPDU transmitted to the STA 120 may include the at least one field generated by the scheduler 114.

In an embodiment, the signal processor 123 of the STA 120 may extract at least one field of a PPDU received through the antenna 121 and the transceiver 122. In such an embodiment, the signal processor 123 may identify, based on the value of the at least one field, a particular configuration and whether an MRU is allocated to the STA 120.

In an embodiment, the signal processor 123 of the STA 120 may generate capability information 124 indicating whether MRU is supported in a particular configuration. For example, the capability information 124 may directly indicate whether MRUs are supported in a particular configuration. Alternatively or additionally, the capability information 124 may indicate at least one supportable MRU among MRUs that may be allocated to the STA 120 in a particular configuration. The AP 110 may allocate the MRU to the STA 120 when the STA 120 identifies, based on the capability information 124, that an MRU is supportable in the particular configuration. Alternatively or additionally, the AP 110 may identify, based on the capability information 124, a particular MRU that may be supportable by the STA 120, and may selectively allocate, to the STA 120, the particular MRU that may be supportable by the STA 120.

In an embodiment, the capability information 124 may indirectly indicate whether MRUs are supported in a particular configuration. For example, the capability information 124 may indicate whether reception of a particular modulation scheme for a single RU (e.g., an RU consisting of 242-tone) is supportable in the particular configuration. As used herein, the particular modulation scheme may refer to a modulation scheme that may provide a data rate greater than a reference data rate. For example, the particular modulation scheme may be any one of 1024-quadrature amplitude modulation (QAM), 4096-QAM, and the like. The AP 110 may allocate an MRU to the STA 120 when the STA 120 identifies, based on the capability information 124, that reception of the particular modulation scheme for a single RU is supportable in the particular configuration. In an embodiment, the capability information 124 may indicate whether reception of a particular modulation and coding scheme (MCS) for a single RU is supportable in the particular configuration. As used herein, the particular MCS may refer to an MCS that may provide a data rate greater than the reference data rate.

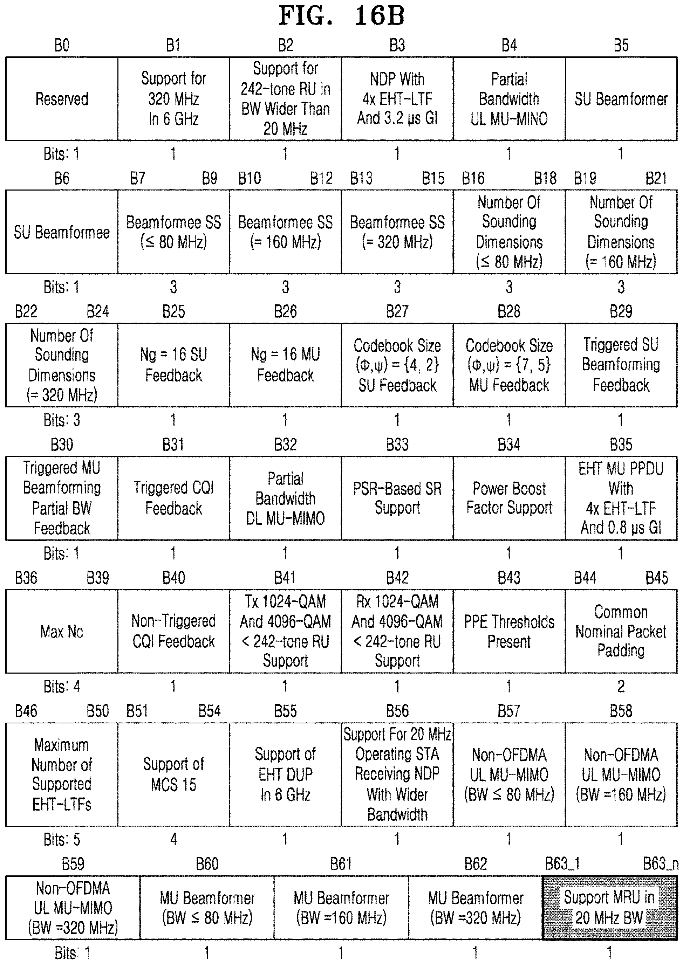

In an embodiment, the STA 120 may transmit the capability information 124 to the AP 110 by using a subfield included in an enhancements for extremely high throughput (EHT) physical (PHY) capabilities information field in an EHT capabilities element format. Examples of the STA 120 transmitting the capability information 124 to the AP 110 are described below with reference to FIGS. 16A and 16B.

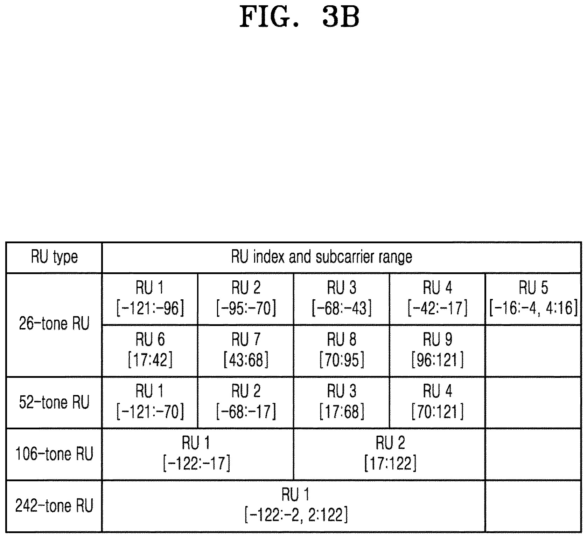

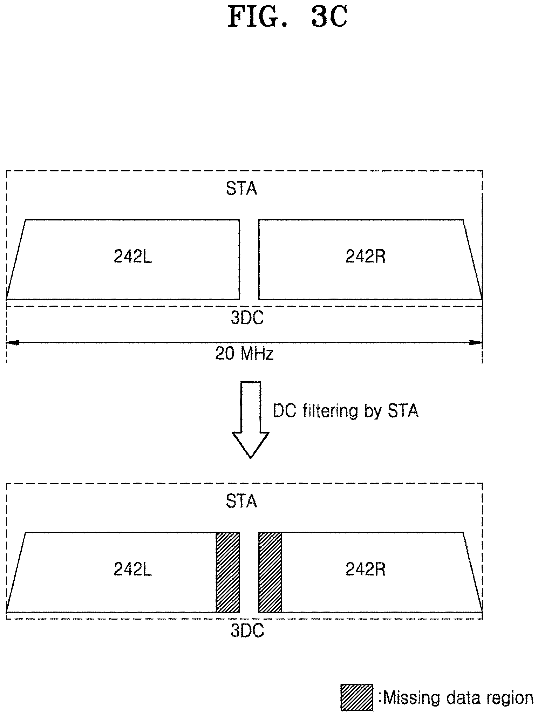

FIGS. 3A and 3B are diagrams illustrating examples of the sizes, positions, and indices of RUs usable in a 20-MHz PPDU, according to an embodiment. FIG. 3C is a diagram illustrating communication performance degradation that may be caused by hardware limitations of an STA when an RU consisting of 242-tone in a 20-MHz bandwidth configuration and a non-OFDMA configuration is allocated to the STA.

As shown in FIG. 3A, at least one RU may be arranged in the frequency domain of a data field (for reference, the horizontal axis of FIG. 3A is the frequency domain). Referring to FIG. 3B, the indices of the RUs are illustrated. For example, a subcarrier index of zero (0) may correspond to a direct current (DC) tone, a negative subcarrier index (e.g., subcarrier index < 0) may correspond to a subcarrier having a frequency less than that of the DC tone, and a positive subcarrier index (e.g., subcarrier index > 0) may correspond to a subcarrier having a high frequency greater than that of the DC tone.

Returning to FIG. 3A, six (6) tones (e.g., subcarriers) may be used as guard bands in the leftmost band of the 20-MHz band, and five (5) tones may be used as guard bands in the rightmost band of the 20-MHz band. Alternatively or additionally, seven (7) DC tones may be inserted into the central band (e.g., a DC band), and an RU consisting of 26 tones may correspond to 13 tones on the left and right sides of the DC band. Alternatively or additionally, 26-tone RUs, 52-tone RUs, and 106-tone RUs may be allocated to other bands. Each RU may be allocated for a receiving device, that is, a user.

In an embodiment, the RU match of FIG. 3A may be utilized not only for a plurality of STAs (and/or a plurality of users) but also for a single STA (and/or a single user). For example, as shown at the lowermost portion of FIG. 3A, one 242-tone RU consisting of 242L (including 121 tones) and 242R (including 121 tones) may be arranged (in such an example, three DC tones may be inserted into the central band), and the 242-tone RU may be allocated to a single STA such that a PPDU according to non-OFDMA may be transmitted to the single STA through a channel with a 20-MHz bandwidth.

As shown in FIG. 3A, RUs of various sizes (e.g., 26-tone RUs, 52-tone RUs, 106-tone RUs, 242-tone RUs, and the like) are proposed. That is, the specific size of such RUs may be expanded and/or increased, and thus, embodiments of present disclosure are not limited to a specific size of each RU (e.g., the number of corresponding tones).

Further referring to FIG. 3B, the RUs of FIG. 3B may be sequentially indexed from a lower frequency. For example, the 26-tone RUs may be indexed to first to ninth RUs RU1 to RU9, the 52-tone RUs may be indexed to the first to fourth RUs RU1 to RU4, and the 106-tone RUs may be indexed to the first and second RUs RU1 and RU2, and the 242-tone RU may be indexed to the first RU RU1. In FIG. 3B, the fifth RU RU5 may be a central 26-tone RU.

As shown in FIG. 3C, the STA receives a PPDU, according to non-OFDMA, through a channel with a 20-MHz bandwidth. One 242-tone RU consisting of 242L and 242R may be allocated to the STA, and the received PPDU may be based on the 242-tone RU. The STA may perform DC filtering using a DC notch filter of the STA so as to remove a DC component from the received PPDU. When the DC notch filter included in the STA is not sophisticated enough to remove only three DC tones, data in a lost data region including some tones adjacent to the three DC tones may be lost due to the DC filtering. Loss of the data may cause degradation in the communication performance of the STA. In order to potentially prevent such degradation in the communication performance, an MRU may be allocated to the STA to replace the 242-tone RU.

FIGS. 4 to 6B are diagrams depicting configuration examples of MRUs, according to an embodiment. Any one of the MRUs illustrated in FIGS. 4 to 6B may be allocated to an STA in a particular configuration related to a PPDU (e.g., a 20-MHz bandwidth configuration and a non-OFDMA configuration).

Referring to FIG. 4, the MRU may consist of 106-tone of the left band and 106-tone of the right band, which may be referred to as a 2×106-tone MRU. The AP may allocate the 2×106-tone MRU to the STA not to use, for data transmission, a band adjacent to a DC band including 7 DC tones, such that data may not be lost by DC filtering.

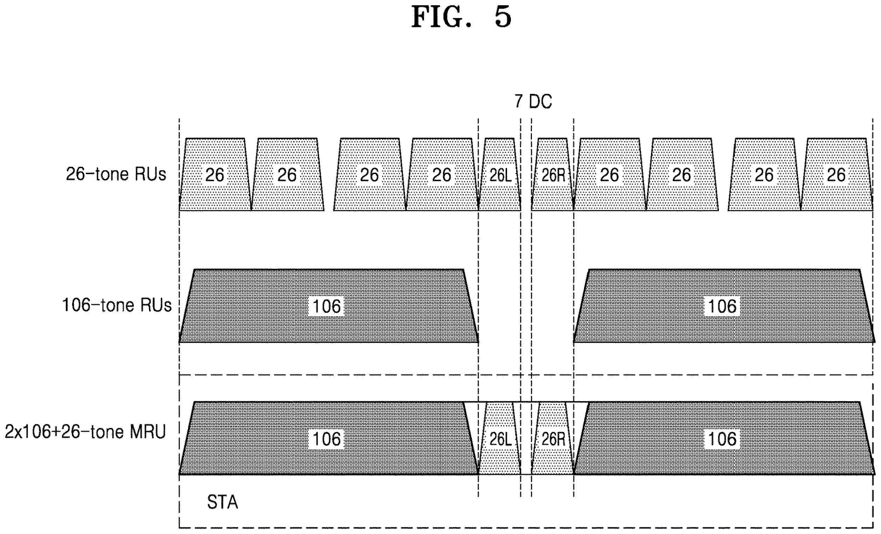

Referring to FIG. 5, the MRU may consist of 106-tone of the left band, 26L-tone consisting of 13 tones of the left band, 26R-tone consisting of 13 tones of the right band, and 106-tone of the right band, which may be referred to as a 2×106+26-tone MRU. The AP may allocate the 2×106+26-tone MRU to the STA and use, for data transmission, the MRU into which 7 DC tones may be inserted, which may be more than those of the 242-tone RU of FIG. 3C into which 3 DC tones may be inserted, thereby potentially reducing data loss due to DC filtering to be less than that in FIG. 3C.

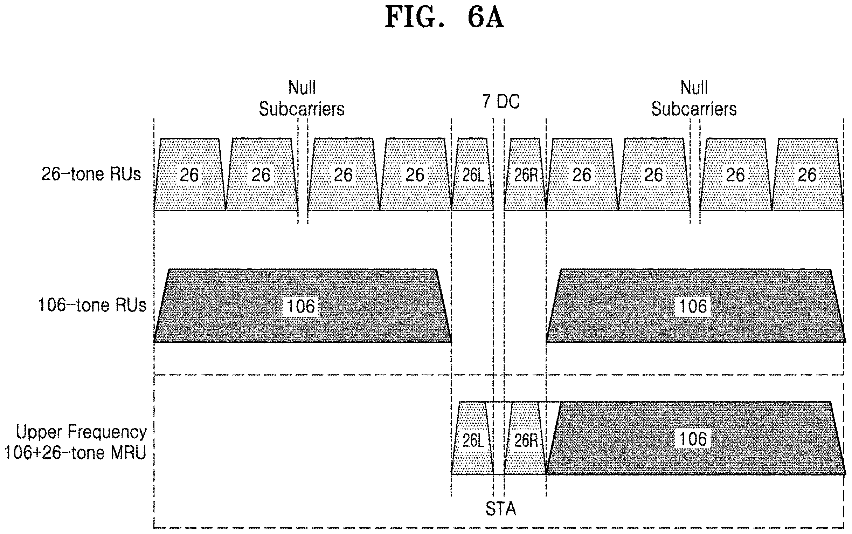

Referring to FIG. 6A, the MRU may consist of 26L-tone consisting of 13 tones of the left band, 26R-tone consisting of 13 tones of the right band, and 106-tone of the right band, which may be referred to as an upper-frequency 106+26-tone MRU. The AP may allocate the upper-frequency 106+26-tone MRU to the STA and use, for data transmission, the MRU into which 7 DC tones may be inserted, which may be more than those of the 242-tone RU of FIG. 3C into which 3 DC tones may be inserted, thereby potentially reducing data loss due to DC filtering to be less than that in FIG. 3C.

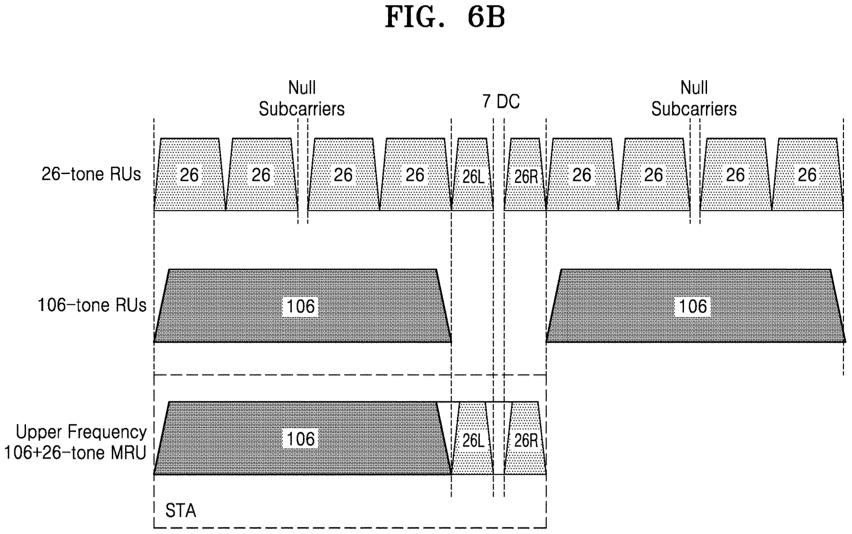

Referring to FIG. 6B, the MRU may consist of 106-tone of the left band, 26L-tone consisting of 13 tones of the left band, and 26R-tone consisting of 13 tones of the right band, which may be referred to as a lower-frequency 106+26-tone MRU. The AP may allocate the lower-frequency 106+26-tone MRU to the STA and use, for data transmission, the MRU into which 7 DC tones may be inserted, which may be more than those of the 242-tone RU of FIG. 3C into which 3 DC tones may be inserted, thereby potentially reducing data loss due to DC filtering to be less than that in FIG. 3C.

However, the configuration examples of the MRUs in FIGS. 4 to 6B are only example embodiments, and thus, the present disclosure is not limited thereto. For example, various configuration examples for potentially minimizing data loss due to DC filtering may be applied to MRUs.

In an embodiment, an MRU that the AP may allocate to the STA may match at least one of the configuration examples of FIGS. 4 to 6B, and the AP may allocate the MRU to the STA. When the AP allocates any one of a plurality of different MRUs to the STA, the AP may select and allocate an MRU that is optimal for the STA. For example, the AP may receive, from the STA, capability information indicating a supportable MRU. In such an example, the AP may select an MRU based on the capability information, and allocate the selected MRU to the STA.

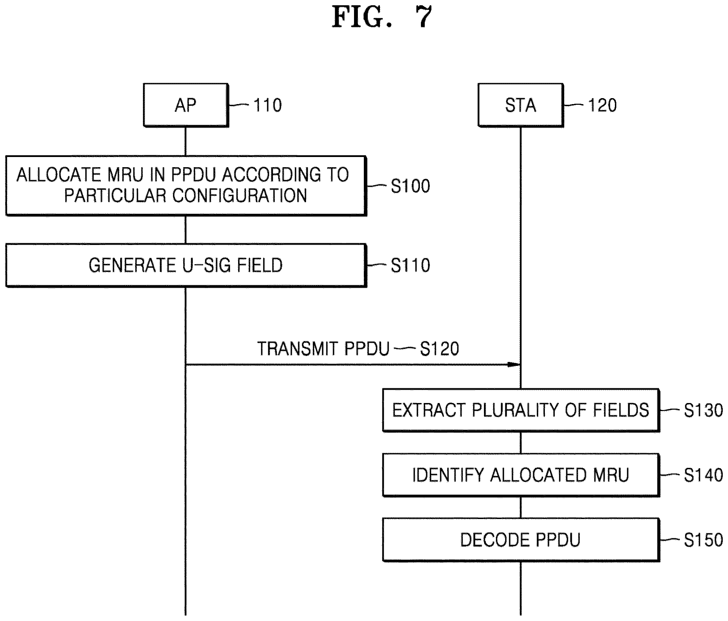

FIG. 7 is a flowchart illustrating an operation method of a wireless communication system, according to an embodiment. The wireless communication system of FIG. 7 may include the AP 110 and the STA 120.

Referring to FIG. 7, in operation S100, the AP 110 may allocate, to the STA 120, an MRU in a PPDU according to a particular configuration. In an embodiment, the particular configuration may include that the bandwidth of a channel through which the PPDU is transmitted is set to 20 MHz and that the PPDU is set to non-OFDMA.

In operation S110, the AP 110 may generate a universal signal (U-SIG) field including a field indicating that the MRU has been allocated to the STA 120. The U-SIG field may further include fields indicating the particular configuration.

In operation S120, the AP 110 may transmit the PPDU to the STA 120.

In operation S130, the STA 120 may extract a plurality of fields from the U-SIG field of the received PPDU.

In operation S140, the STA 120 may identify the MRU allocated to the STA 120 by the AP 110. Alternatively or additionally, the STA 120 may identify the particular configuration selected, or used, by the AP 110.

In operation S150, the STA 120 may decode the PPDU based on a result of the identifying of operation S140. In an embodiment, the STA 120 may extract, from the PPDU, data received through the identified MRU, and decode the data.

FIG. 8 is a diagram illustrating a PPDU, according to an embodiment. Referring to FIG. 8, the structure of an EHT PPDU is illustrated. In an embodiment, the present disclosure may also be applied to Ultra-High Reliability (UHR), and in such a case, the EHT PPDU may be understood as a UHR PPDU.

Referring to FIG. 8, the EHT PPDU may include a preamble including training fields and signal fields, and a payload including a data field. In the EHT PPDU, the preamble may include a legacy-short training field (L-STF), a legacy-long training field (L-LTF), a legacy-signal (L-SIG) field, a repeated legacy-signal (RL-SIG) field, a U-SIG field, an EHT-signal (EHT-SIG) field, an EHT-short training field (EHT-STF), and an EHT-long training field (EHT-LTF). Alternatively or additionally, in the EHT PPDU, the payload may include a data field and a packet extension (PE) field. As used herein, a U-SIG field and an EHT-SIG field may be referred to as U-SIG and EHT-SIG, respectively.

The L-STF may include short training OFDM symbols, and may be used for frame detection, automatic gain control (AGC), diversity detection, and/or coarse frequency/time synchronization. The L-LTF may include long training OFDM symbols, and may be used for fine frequency/time synchronization and/or channel estimation. The L-SIG field may be used for transmission of control information, and may include information about a data rate and a data length. In some embodiments, the L-SIG field may be repeated in the RL-SIG field.

The U-SIG field (or U-SIG) may include control information common to at least one station that receives the EHT PPDU. For example, as shown in FIG. 8, the U-SIG field may include version-independent fields and version-dependent fields. In some embodiments, the U-SIG field may further include fields corresponding to a cyclic redundancy check (CRC) and a tail, respectively, and/or reserved bits. The version-independent fields may have static positions and bit definitions in different generations and/or physical versions. In some embodiments, unlike the EHT-SIG field described below, the U-SIG field may be modulated based on a single modulation scheme (e.g., binary phase-shift keying (BPSK)). An example of a U-SIG field indicating a particular configuration and whether an MRU is allocated, according to an embodiment, is described below with reference to FIG. 9.

The EHT-SIG field may have a variable MCS and length. For example, when the EHT PPDU is transmitted to a plurality of users, the EHT-SIG field may include a common field including common control information, and a user-specific field including user-dependent control information, as shown in FIG. 8. As shown in FIG. 8, the U-SIG field may have a fixed length (e.g., a 52-bit length), whereas the EHT-SIG field may have a variable length. The common field may include U-SIG overflow, the total number of non-OFDMA STAs (or users), and RU allocation subfield (RUA). A user-specific field for non-MU-MIMO may include an STA-ID subfield, an MCS subfield, a number of spatial streams (N_{STS}) subfield, a beamformed subfield, and a coding subfield, and a user-specific field for MU-MIMO may include an STA-ID subfield, an MCS subfield, a coding subfield, and a spatial configuration subfield. In some embodiments, the EHT-SIG field may be modulated based on any one of two or more modulation schemes (e.g., BPSK, quadrature BPSK (QBPSK), and the like).

FIG. 9 is a diagram illustrating a U-SIG field, according to an embodiment. As described above with reference to FIG. 8, the U-SIG field may be included in an EHT PPDU, and an EHT-SIG field may follow the U-SIG field.

Referring to FIG. 9, the U-SIG field may include U-SIG-1 and U-SIG-2. As shown in FIG. 9, U-SIG-1 may consist of 26 bits (e.g. B0 to B25), and U-SIG-2 may consist of 26 bits (e.g., B0 to B25).

U-SIG-1 may include, as version-independent fields, a physical version identifier field (3 bits), a bandwidth field (3 bits), an uplink (UL)/downlink (DL) field (1 bit), a basic service set (BSS) color field (6 bits), a transmit opportunity (TXOP) field (7 bits), and reserved fields Disregard and Val.

Alternatively or additionally, U-SIG-2 may include, as version-dependent fields, a PPDU type, and compression mode field Type & Mode (2 bits), a punctured channel information field (5 bits), an EHT-SIG MCS field (2 bits), a number of EHT-SIG symbols field (5 bits), a CRC field (4 bits), a tail field (6 bits), and a reserved field Val.

In an embodiment, the AP may indicate, through a bandwidth field BW, that the bandwidth is set to 20 MHz, and may indicate, through the PPDU type and compression mode field Type & Mode, that non-OFDMA is set. Alternatively or additionally, the AP may indicate, through the punctured channel information field, that the MRU has been allocated to the STA. The STA may extract the bandwidth field BW of U-SIG-1 and the PPDU type and compression mode field Type & Mode of U-SIG-2, and identify a particular configuration, based on values of the extracted fields. Alternatively or additionally, the STA may extract the punctured channel information field of U-SIG-2 and identify, based on a value of the extracted field, that the MRU is allocated to the STA in the PPDU according to the particular configuration.

However, the embodiment described with reference to FIG. 9 is only an embodiment, and thus, embodiments of the present disclosure are not limited thereto. For example, the AP may indicate, by using the reserved fields of the U-SIG field, whether the MRU is allocated in the PPDU according to the particular configuration.

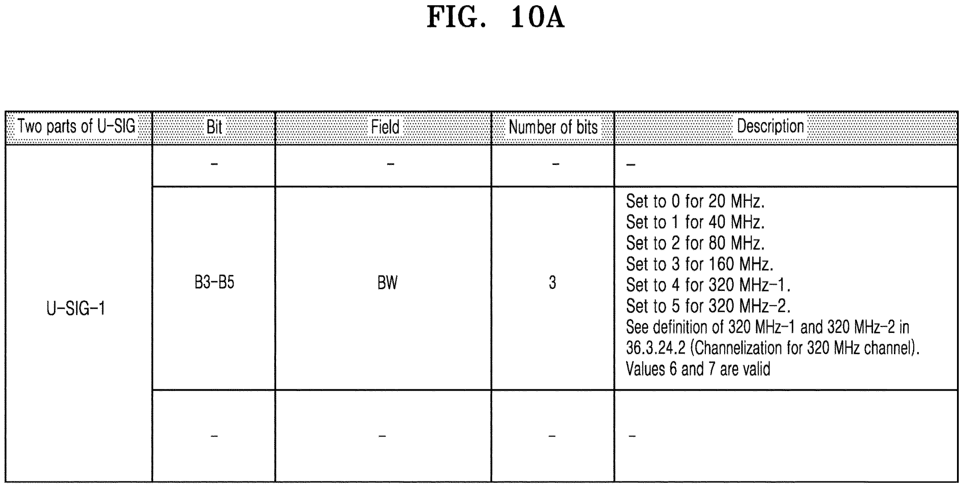

FIGS. 10A to 10C are diagrams depicting fields for identifying whether an MRU is allocated, according to an embodiment. For ease of understanding, FIGS. 10A to 10C are described based on the IEEE 802.11be standard. However, it may be understood that the present disclosure is not limited thereto. That is, the example embodiments may be applied to other communication standards without departing from the scope of the present disclosure.

Referring to FIG. 10A, the value of the bandwidth field BW consisting of three bits B3 to B5 in U-SIG-1 may be set to any one of zero (e.g., 0, "000"), one (e.g., 1, "001"), two (e.g., 2, "010"), three (e.g., 3, "011"), four (e.g., 4, "100"), and five (e.g., 5, "101"). For example, in the bandwidth field BW, a zero (e.g., 0, "000") may indicate a channel bandwidth of 20 MHz, a one (e.g., 1, "001") may indicate a channel bandwidth of 40 MHz, a two (e.g., 2, "010") may indicate a channel bandwidth of 80 MHz, a three (e.g., 3, "011") may indicate a channel bandwidth of 160 MHz, a four (e.g., 4, "100") may indicate a channel bandwidth of 320 MHz-1 (e.g., a channel bandwidth of 320 MHz with a first arrangement type), and a five (e.g., 5, "101") may indicate a channel bandwidth of 320 MHz-2 (e.g., a channel bandwidth of 320 MHz with a second arrangement type). Hereinafter, it may be assumed that the bandwidth field BW is set to zero (e.g., 0, "000") in a particular configuration.

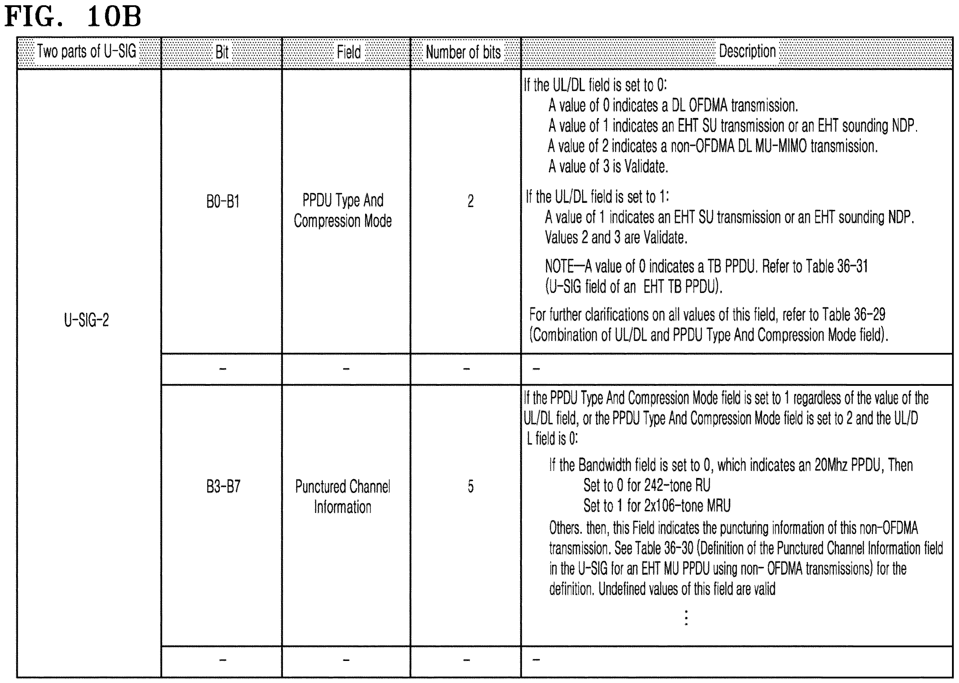

Referring to FIG. 10B, the value of the PPDU type and compression mode field consisting of two bits of B0 and B1 in U-SIG-2 may be set to one of zero (e.g., 0, "00"), one (e.g., 1, "01"), two (e.g., 2, "10"), and three (e.g., 3, "11"). For example, when the value of the UL/DL field of FIG. 9 is zero (e.g., 0, "0"), in the PPDU type and compression mode field, zero (e.g., 0, "00") may indicate a DL OFDMA transmission, one (e.g., 1, "01") may indicate an EHT single user (SU) transmission or an EHT sounding null data packet (NDP), and two (e.g., 0, "10") may indicate a non-OFDMA DL MU-MIMO transmission.

When the value of the UL/DL field of FIG. 9 is one (e.g., 1, "1"), in the PPDU type and compression mode field, zero (e.g., 0, "00") may indicate an EHT SU transmission or an EHT sounding NDP.

That is, when the value of the UL/DL field is zero (e.g., 0, "0"), a one (e.g., 1, "001") or a two (e.g., 2, "010") in the PPDU type and compression mode field may indicate that the PPDU is set to non-OFDMA, and when the value of the UL/DL field is one (e.g., 1, "1"), a one (e.g., 1, "001") in the PPDU type and compression mode field may indicate that the PPDU is set to non-OFDMA.

The value of the punctured channel information field consisting of 5 bits of B3 to B7 in U-SIG-2 may be set to any one of zero (e.g., 0, "00000") or one (e.g., 1, "00001") to indicate whether the MRU is allocated. For example, when the value of the UL/DL field is zero (e.g., 0, "0") and the value of the PPDU type and compression mode field is two (e.g., 2, "010"), or when the value of the PPDU type and compression mode field is one (e.g., 1, "001") regardless of the value of the UL/DL field, in a case in which the value of the bandwidth field BW is zero (e.g., 0, "000"), zero (e.g., 0, "00000") in the punctured channel information field may indicate that the 242-tone RU of FIG. 3A has been allocated, and/or one (e.g., 1, "00001") may indicate that the 2×106-tone MRU of FIG. 4 has been allocated.

In an embodiment, when the value of the PPDU type and compression mode field is zero (e.g., 0, "000") and the value of the UL/DL field is zero (e.g., 0, "0"), in a case in which the value of the bandwidth field BW is between two (e.g., "010") and five (e.g., 5, "101"), the bits B3 to B7 of the punctured channel information field may be used in a bitmap manner to indicate a puncturing pattern of any one of 80 MHz, 160 MHz, and 320 MHz.

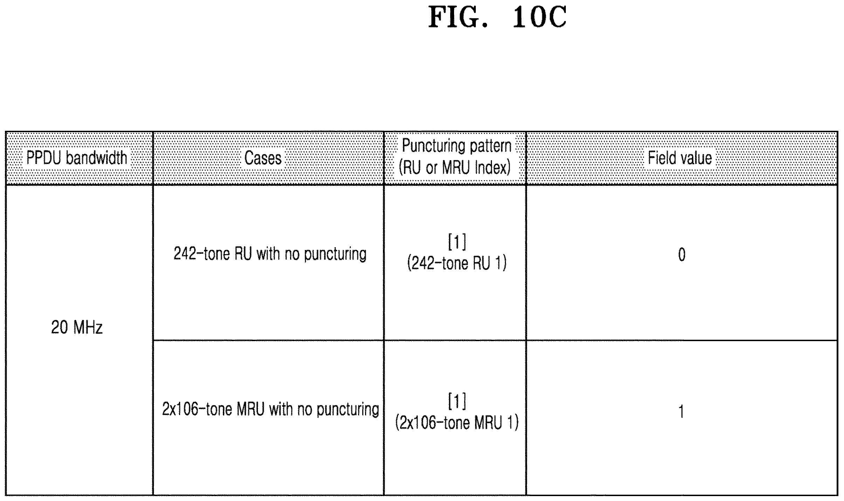

FIG. 10C is a diagram showing encoding of a punctured channel information field. Referring to FIG. 10C, puncturing might not occur in a bandwidth of 20 MHz, and the value of the punctured channel information field may indicate whether any one of a single RU and an MRU is allocated. In a bandwidth of 20 MHz, the value of the punctured channel information field may be any one of zero (e.g., 0, "00000") and one (e.g., 1, "00001"). When the value of the punctured channel information field in a 20-MHz bandwidth is zero (e.g., 0, "00000"), the punctured channel information field may indicate that a non-punctured 242-tone RU (or RU 1 having index 1) has been allocated, and when the value of the punctured channel information field in the 20-MHz bandwidth is one (e.g., 1, "00001"), the punctured channel information field may indicate that an unpunctured 2×106-tone MRU (or MRU 1 with index 1) has been allocated.

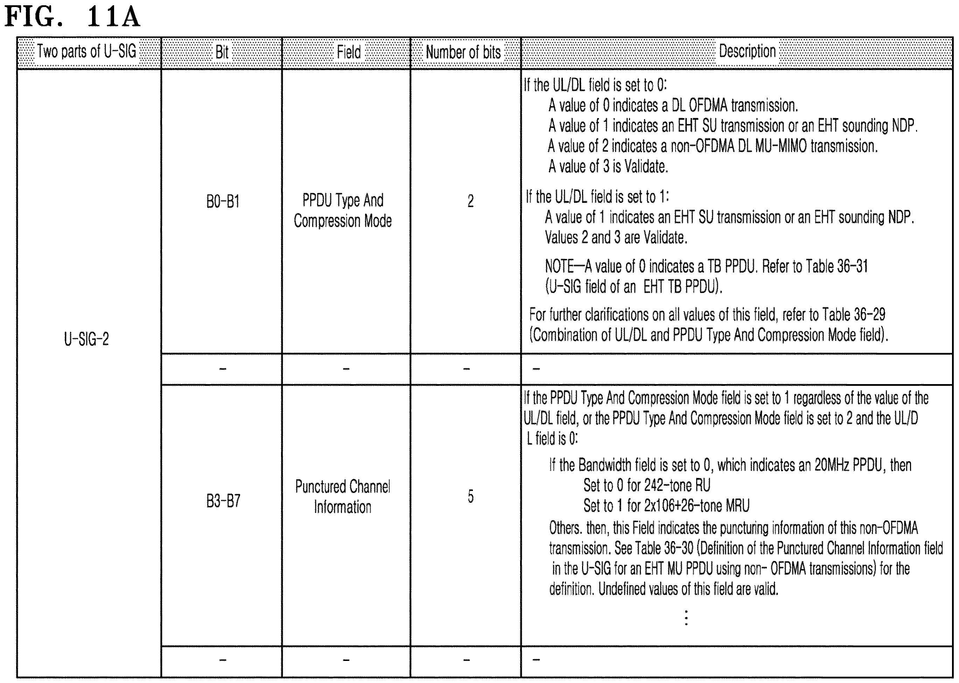

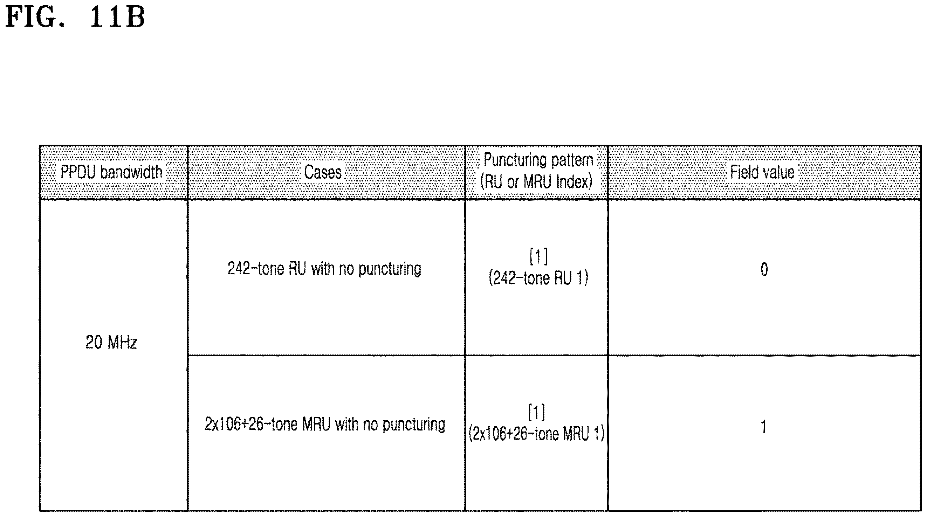

FIGS. 11A and 11B are diagrams illustrating fields for identifying whether an MRU is allocated, according to an embodiment. Hereinafter, it may be assumed that the value of the bandwidth field BW of FIG. 10A is set to zero (e.g., 0, "000"). In addition, for ease of description, the following description with reference to FIGS. 11A and 11B focuses on differences between FIGS. 11A and 11B and FIGS. 10B and 10C.

Referring to FIG. 11A, the value of the punctured channel information field consisting of 5 bits of B3 to B7 in U-SIG-2 may be set to any one of zero (e.g., 0, "00000") or one (e.g., 1, "00001") to indicate whether the MRU is allocated. For example, when the value of the UL/DL field is zero (e.g., 0, "0") and the value of the PPDU type and compression mode field is two (e.g., 2, "010"), or when the value of the PPDU type and compression mode field is one (e.g., 1, "001") regardless of the value of the UL/DL field, in a case in which the value of the bandwidth field BW is zero (e.g., 0, "0"), a zero (e.g., 0, "00000") in the punctured channel information field may indicate that the 242-tone RU of FIG. 3A has been allocated, and one (e.g., 1, "00001") may indicate that the 2×106+26-tone MRU of FIG. 5 has been allocated.

Referring to FIG. 11B, when the value of the punctured channel information field in a 20-MHz bandwidth is zero (e.g., 0, "00000"), it may indicate that a non-punctured 242-tone RU (or RU 1 having index 1) has been allocated, and when the value of the punctured channel information field in the 20-MHz bandwidth is one (e.g., 1, "00001"), it may indicate that an unpunctured 2×106+26-tone MRU (or MRU 1 with index 1) has been allocated.

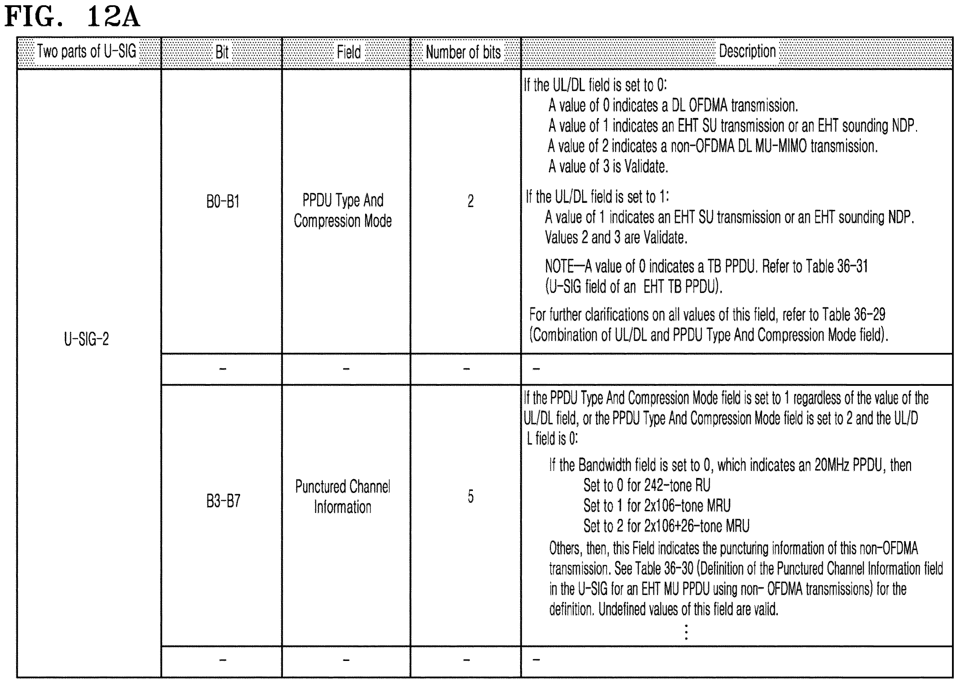

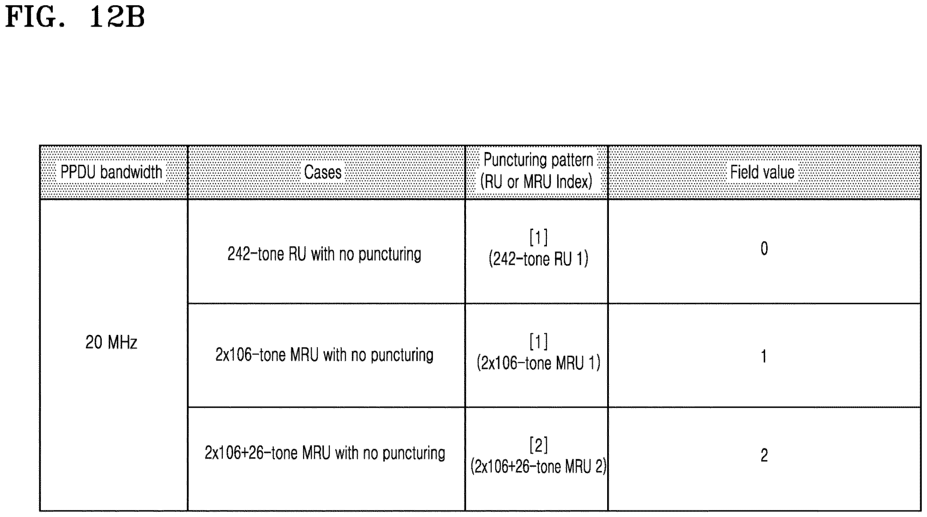

FIGS. 12A and 12B are diagrams depicting fields for identifying whether an MRU is allocated, according to an embodiment. Hereinafter, it may be assumed that the value of the bandwidth field BW of FIG. 10A is set to zero (e.g., 0, "000") In addition, for ease of description, the following description with reference to FIGS. 12A and 12B focuses on differences between FIGS. 12A and 12B and FIGS. 10B and 10C.

Referring to FIG. 12A, the value of the punctured channel information field consisting of 5 bits of B3 to B7 in U-SIG-2 may be set to any one of zero (e.g., 0, "00000") or one (e.g., 1, "00001") to indicate whether the MRU is allocated. For example, when the value of the UL/DL field is zero (e.g., 0, "0") and the value of the PPDU type and compression mode field is two (e.g., 2, "010"), or when the value of the PPDU type and compression mode field is one (e.g., 1, "001") regardless of the value of the UL/DL field, in a case in which the value of the bandwidth field BW is zero (e.g., 0, "0"), a zero (e.g., 0, "00000") in the punctured channel information field may indicate that the 242-tone RU of FIG. 3A has been allocated, a one (e.g., 1, "00001") may indicate that the 2×106-tone MRU of FIG. 4 has been allocated, and a two (e.g., 2, "00010") may indicate that the 2×106+26-tone MRU of FIG. 5 has been allocated.

Referring to FIG. 12B, when the value of the punctured channel information field in a 20-MHz bandwidth is zero (e.g., 0, "00000"), it may indicate that a non-punctured 242-tone RU (or RU 1 having index 1) has been allocated, when the value of the punctured channel information field in the 20-MHz bandwidth is one (e.g., 1, "00001"), it may indicate that an unpunctured 2×106-tone MRU (or MRU 1 with index 1) has been allocated, and when the value of the punctured channel information field in the 20-MHz bandwidth is two (e.g., 2, "00010"), it may indicate that an unpunctured 2×106+26-tone MRU (or MRU 2 with index 2) has been allocated.

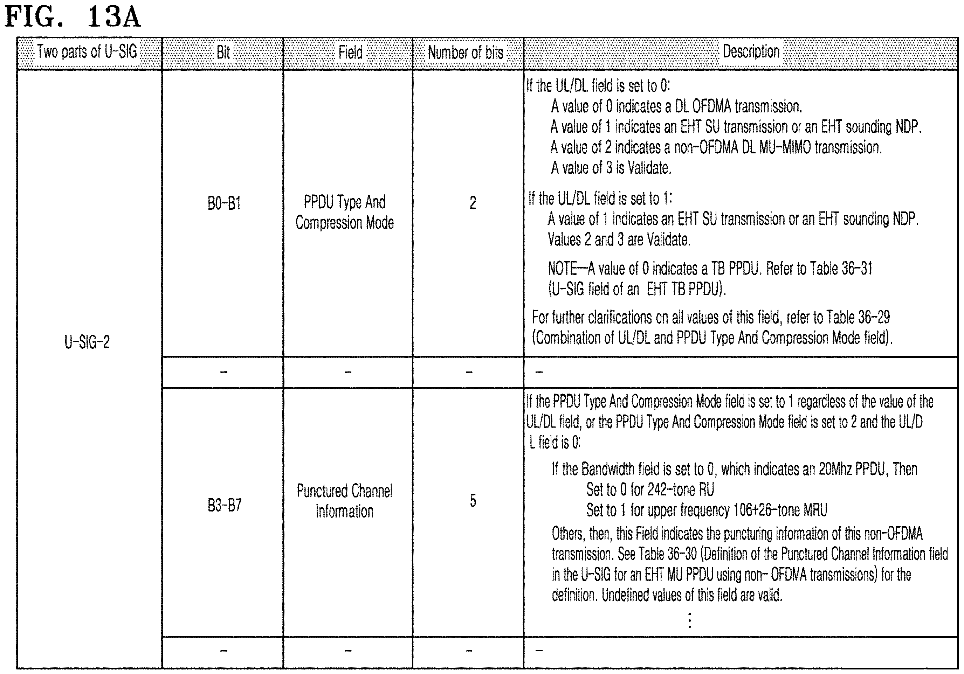

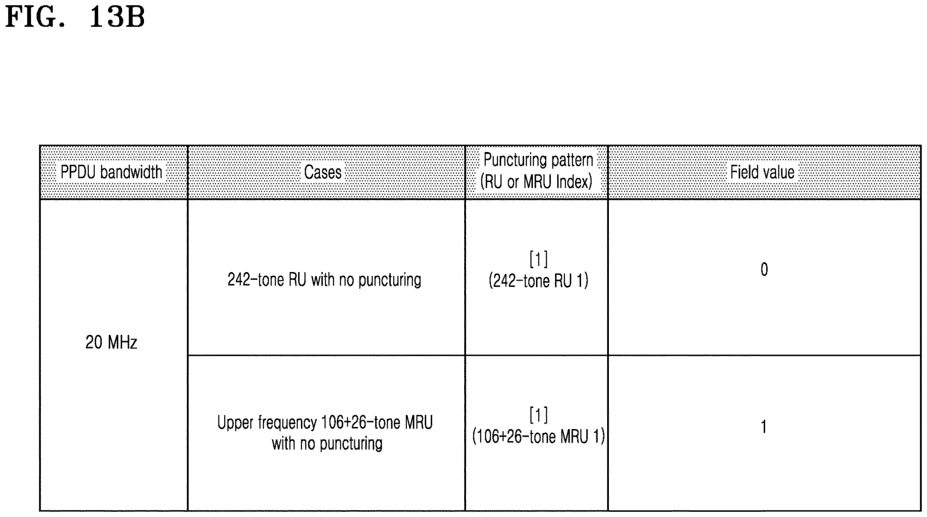

FIGS. 13A and 13B are diagrams illustrating fields for identifying whether an MRU is allocated, according to an embodiment. Hereinafter, it may be assumed that the value of the bandwidth field BW of FIG. 10A is set to zero (e.g., 0, "000"). In addition, for ease of description, the following description with reference to FIGS. 11A and 11B focuses on differences between FIGS. 13A and 13B and FIGS. 10B and 10C.

Referring to FIG. 13A, the value of the punctured channel information field consisting of 5 bits of B3 to B7 in U-SIG-2 may be set to any one of zero (e.g., 0, "00000") or one (e.g., 1, "00001") to indicate whether the MRU is allocated. For example, when the value of the UL/DL field is zero (e.g., 0, "0") and the value of the PPDU type and compression mode field is two (e.g., 2, "010"), or when the value of the PPDU type and compression mode field is one (e.g., 1, "001") regardless of the value of the UL/DL field, in a case in which the value of the bandwidth field BW is zero (e.g., 0, "0"), a zero (e.g., 0, "00000") in the punctured channel information field may indicate that the 242-tone RU of FIG. 3A has been allocated, and a one (e.g., 1, "00001") may indicate that the upper-frequency 106+26-tone MRU of FIG. 6A has been allocated.

Referring to FIG. 13B, when the value of the punctured channel information field in a 20-MHz bandwidth is zero (e.g., 0, "00000"), it may indicate that a non-punctured 242-tone RU (or RU 1 having index 1) has been allocated, and when the value of the punctured channel information field in the 20-MHz bandwidth is one (e.g., 1, "00001"), it may indicate that an unpunctured upper-frequency 106+26-tone MRU (or MRU 1 with index 1) has been allocated.

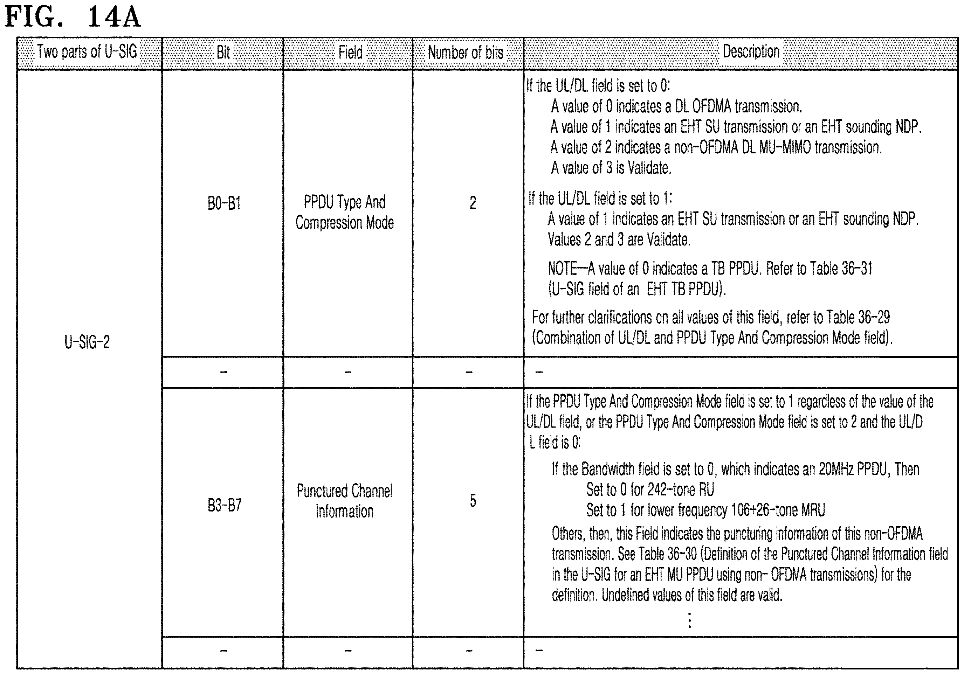

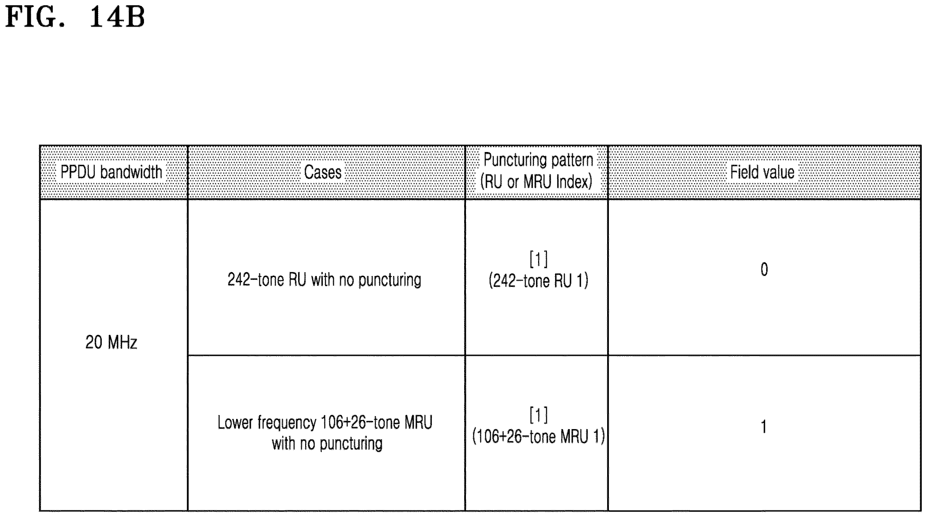

FIGS. 14A and 14B are diagrams depicting fields for identifying whether an MRU is allocated, according to an embodiment. Hereinafter, it may be assumed that the value of the bandwidth field BW of FIG. 10A is set to zero (e.g., 0, "000"). In addition, for ease of description, the following description with reference to FIGS. 11A and 11B focuses on differences between FIGS. 14A and 14B and FIGS. 10B and 10C.

Referring to FIG. 14A, the value of the punctured channel information field consisting of 5 bits of B3 to B7 in U-SIG-2 may be set to any one of zero (e.g., 0, "00000") or one (e.g., 1, "00001") to indicate whether the MRU is allocated. For example, when the value of the UL/DL field is zero (e.g., 0, "0") and the value of the PPDU type and compression mode field is two (e.g., 2, "010"), or when the value of the PPDU type and compression mode field is one (e.g., 1, "001") regardless of the value of the UL/DL field, in a case in which the value of the bandwidth field BW is zero (e.g., 0, "0"), a zero (e.g., 0, "00000") in the punctured channel information field may indicate that the 242-tone RU of FIG. 3A has been allocated, and a one (e.g., 1, "00001") may indicate that the lower-frequency 106+26-tone MRU of FIG. 6B has been allocated.

Further referring to FIG. 14B, when the value of the punctured channel information field in a 20-MHz bandwidth is zero (e.g., 0, "00000"), it may indicate that a non-punctured 242-tone RU (or RU 1 having index 1) has been allocated, and when the value of the punctured channel information field in the 20-MHz bandwidth is one (e.g., 1, "00001"), it may indicate that an unpunctured lower-frequency 106+26-tone MRU (or MRU 1 with index 1) has been allocated.

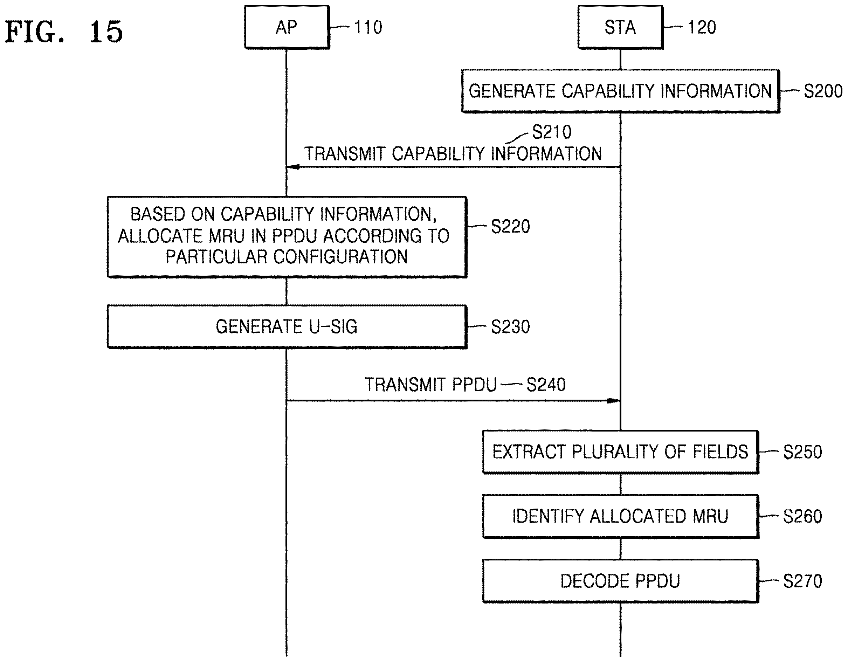

FIG. 15 is a flowchart illustrating an operation method of a wireless communication system, according to an embodiment. The wireless communication system may include the AP 110 and the STA 120.

Referring to FIG. 15, in operation S200, the STA 120 may generate capability information that may directly and/or indirectly indicate whether allocation of an MRU may be supportable in a PPDU according to a particular configuration.

In operation S210, the STA 120 may transmit the capability information to the AP 110. For example, operation S210 may be performed in a process of establishing a connection between the AP 110 and the STA 120. In such an example, the AP 110 may perform an MCS, resource allocation, and the like for communication based on the capability information of the STA 120. In an embodiment, the STA 120 may use an EHT capabilities element format as described in a communications standard (e.g., IEEE 802.11be) to transmit the capability information to the AP 110. Examples of the STA 120 using the EHT capabilities element format are described with reference to FIGS. 16A to 22B.

In operation S220, the AP 110 may allocate the MRU in the PPDU according to the particular configuration, based on the capability information of the STA 120. In some embodiments, when the STA 120 cannot support allocation of the MRU in the PPDU according to the particular configuration, the AP 110 may allocate a single RU (e.g., a 242-tone RU in a 20-MHz bandwidth) in the PPDU according to the particular configuration. As described above, the particular configuration may indicate that the bandwidth of a channel through which the PPDU is transmitted is set to 20 MHz and that the PPDU is set to non-OFDMA.

In operation S230, the AP 110 may generate a U-SIG field including a field indicating that the MRU has been allocated to the STA 120. In an embodiment, the U-SIG field may further include fields indicating the particular configuration.

In operation S240, the AP 110 may transmit the PPDU to the STA 120.

In operation S250, the STA 120 may extract a plurality of fields from the U-SIG field of the received PPDU.

In operation S260, the STA 120 may identify the MRU allocated to the STA 120 by the AP 110. Alternatively or additionally, the STA 120 may identify the particular configuration selected, or used, by the AP 110.

In operation S270, the STA 120 may decode the PPDU based on a result of the identifying of operation S260. In an embodiment, the STA 120 may extract, from the PPDU, data received through the identified MRU, and decode the data. For example, the STA 120 may decode the payload extracted from the PPDU based on the result of the identifying of operation S260.

FIG. 16A is a diagram illustrating an EHT capabilities element format for transmitting capability information of an STA to an AP, according to an embodiment FIG. 16B is a diagram illustrating an EHT PHY Capabilities Information field including capability information indicating whether an MRU is supportable, according to an embodiment.

Referring to FIG. 16A, the EHT capabilities element format may include an Element field, a Length field, an Element ID Extension field, an EHT medium access control (MAC) Capabilities Information field, an EHT PHY Capabilities Information field, a Supported EHT-MCS and Number-of-Spatial-Streams (NSS) Set field, and an EHT PPE Thresholds field (Optional). The fields of the EHT capabilities element format may be described in a communications standard (e.g., IEEE 802.11be), and thus, a detailed descriptions other than those related to the present disclosure may be omitted.

In an embodiment, the capability information of the STA may be included in an EHT PHY Capabilities Information field, and then transmitted to the AP. However, this is only an example embodiment, and the present disclosure is not limited thereto. For example, the capability information may be transmitted to the AP by using another field of the EHT capabilities element format.

Referring to FIG. 16B, the EHT PHY Capabilities Information field may include a reserved subfield, a Support For 320 MHz In 6 GHz subfield, a Support For 242-tone RU In BW Wider Than 20 MHz subfield, an NDP With 4x EHT-LTF And 3.2 µs Guard Interval (GI) subfield, a Partial Bandwidth UL MU-MIMO subfield, an SU Beamformer subfield, an SU Beamformee subfield, a Beamformee SS (≤ 80 MHz) subfield, a Beamformee SS (= 160 MHz) subfield, a Beamformee SS (= 320 MHz) subfield, a Number Of Sounding Dimensions (≤ 80 MHz) subfield, a Number Of Sounding Dimensions (= 160 MHz) subfield, a Number Of Sounding Dimensions (= 320 MHz) subfield, an Ng=16 SU Feedback subfield, an Ng=16 MU Feedback subfield, a Codebook Size (ϕ,ψ)={4, 2} SU Feedback subfield, a Codebook Size (ϕ,ψ)={7, 5} MU Feedback subfield, a Triggered SU Beamforming Feedback subfield, a Triggered MU Beamforming Partial BW Feedback subfield, a Triggered CQI Feedback subfield, a Partial Bandwidth DL MU-MIMO subfield, a PSR-Based SR Support subfield, a Power Boost Factor Support subfield, an EHT MU PPDU With 4x EHT-LTF And 3.8 µs GI subfield, a Max Nc subfield, a Non-Triggered CQI Feedback subfield, a Tx 1024-QAM And 4096-QAM < 242-tone RU Support subfield, an Rx 1024-QAM And 4096-QAM < 242-tone RU Support subfield, a PPE Thresholds Present subfield, a Common Nominal Packet Padding subfield, a Maximum Number Of Supported EHT-LTFs subfield, a Support Of MCS 15 subfield, a Support Of EHT DUP In 6GHz subfield, a Support For 20 MHz Operating STA Receiving NDP With Wider Bandwidth subfield, a Non-OFDMA UL MU-MIMO (BW≤80 MHz) subfield, a Non-OFDMA UL MU-MIMO (BW=160 MHz) subfield, a Non-OFDMA UL MU-MIMO (BW=320 MHz) subfield, an MU Beamformer (BW≤80 MHz) subfield, an MU Beamformer (BW=160 MHz) subfield, an MU Beamformer (BW=320 MHz) subfield, and a Support MRU in 20 MHz BW subfield.

In an embodiment, the Support MRU in 20 MHz BW subfield may include STA capability information directly and/or indirectly indicating whether an MRU is supportable in a PPDU according to a particular configuration. The Support MRU in 20 MHz BW subfield may consist of n bits (where n is a positive integer greater than or equal to one (1)). The number of bits constituting the Support MRU in 20 MHz BW subfield may vary depending on whether the MRU is supportable in the PPDU according to the particular configuration, and an expression method of capability information indicating at least one of supportable MRUs.

However, as shown in FIG. 16B, the Support MRU in 20 MHz BW subfield may not be separately defined, and the capability information of the STA according to an embodiment, instead of null data, may be included in a particular subfield that may be filled with null data according to the communication state of the STA, and then transmitted to the AP.

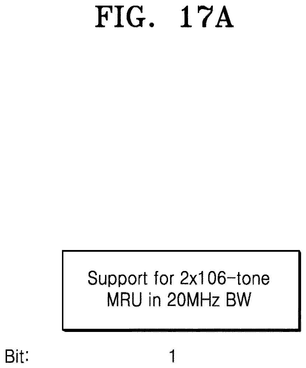

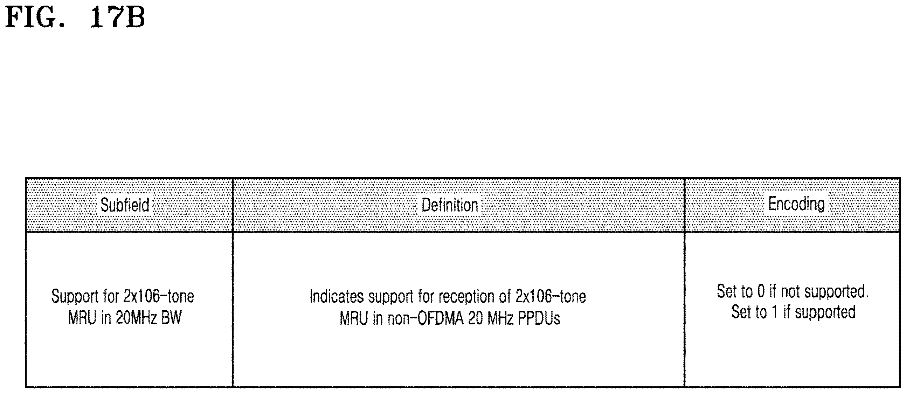

FIG. 17A is a diagram depicting a detailed implementation example of the Support MRU in 20 MHz BW subfield of FIG. 16B. FIG. 17B is a diagram illustrating the implementation example of FIG. 17A, according to an embodiment.

Referring to FIG. 17A, the Support MRU in 20 MHz BW subfield may be implemented as a 1-bit Support for 2×106-tone MRU in 20 MHz BW subfield to indicate whether the STA may support a 2×106-tone MRU in a PPDU according to a particular configuration.

Referring to FIG. 17B, when the value of the Support for 2×106-tone MRU in 20 MHz BW subfield is zero (e.g., 0, "0"), it may indicate that the STA is unable to support reception of a 2×106-tone MRU in a 20-MHz bandwidth and non-OFDMA, and when the value of the Support for 2×106-tone MRU in 20 MHz BW subfield is one (e.g., 1, "1"), it may indicate that the STA is able to support reception of a 2×106-tone MRU in a 20-MHz bandwidth and non-OFDMA.

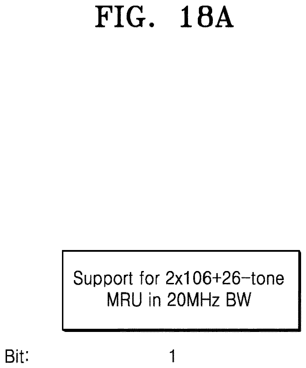

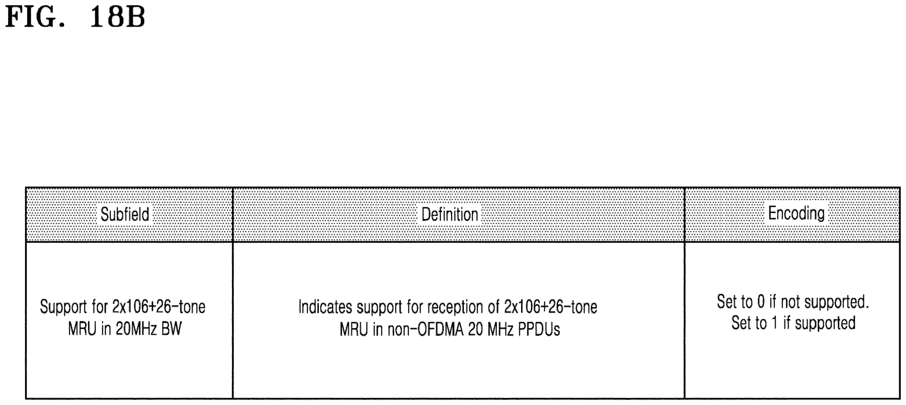

FIG. 18A is a diagram depicting a detailed implementation example of the Support MRU in 20 MHz BW subfield of FIG. 16B. FIG. 18B is a diagram illustrating the implementation example of FIG. 18A, according to an embodiment.

Referring to FIG. 18A, the Support MRU in 20 MHz BW subfield may be implemented as a 1-bit Support for 2×106+26-tone MRU in 20 MHz BW subfield to indicate whether the STA may support a 2×106+26-tone MRU in a PPDU according to a particular configuration.

Referring to FIG. 18B, when the value of the Support for 2×106+26-tone MRU in 20 MHz BW subfield is zero (e.g., 0, "0"), it may indicate that the STA is unable to support reception of a 2×106+26-tone MRU in a 20-MHz bandwidth and non-OFDMA, and when the value of the Support for 2×106+26-tone MRU in 20 MHz BW subfield is one (e.g., 1, "1"), it may indicate that the STA is able to support reception of a 2×106+26-tone MRU in a 20-MHz bandwidth and non-OFDMA.

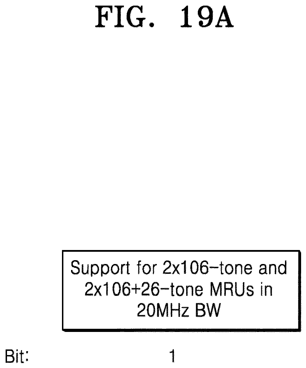

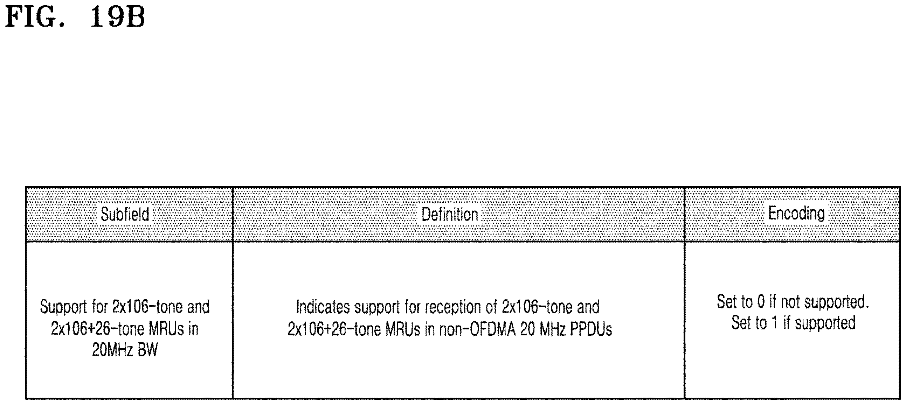

FIG. 19A is a diagram depicting a detailed implementation example of the Support MRU in 20 MHz BW subfield of FIG. 16B, according to an embodiment. FIG. 19B is a diagram illustrating the implementation example of FIG. 19A, according to an embodiment.

Referring to FIG. 19A, the Support MRU in 20 MHz BW subfield may be implemented as a 1-bit Support for 2×106-tone and 2×106+26-tone MRU in 20 MHz BW subfield to indicate whether the STA may support a 2×106-tone MRU and a 2×106+26-tone MRU in a PPDU according to a particular configuration.

Referring to FIG. 19B, when the value of the Support for 2×106-tone and 2×106+26-tone MRU in 20 MHz BW subfield is zero (e.g., 0, "0"), it may indicate that the STA is unable to support reception of a 2×106-tone MRU and a 2×106+26-tone MRU in a 20-MHz bandwidth and non-OFDMA, and when the value of the Support for 2×106-tone and 2×106+26-tone MRU in 20 MHz BW subfield is one (e.g., 1, "1"), it may indicate that the STA is able to support reception of a 2×106-tone MRU and a 2×106+26-tone MRU in a 20-MHz bandwidth and non-OFDMA.

In some embodiments, the Support MRU in 20 MHz BW subfield may be implemented as a 2-bit Support for 2×106-tone or 2×106+26-tone MRU in 20 MHz BW subfield to indicate whether the STA may support a 2×106-tone MRU or a 2×106+26-tone MRU in a PPDU according to a particular configuration.

Alternatively or additionally, in some embodiments, when the value of the Support for 2×106-tone or 2×106+26-tone MRU in 20 MHz BW subfield is zero (e.g., 0, "00"), it may indicate that the STA is unable to support reception of a 2×106-tone MRU and a 2×106+26-tone MRU in a 20-MHz bandwidth and non-OFDMA, when the value of the Support for 2×106-tone or 2×106+26-tone MRU in 20 MHz BW subfield is one (e.g., 1, "01"), it may indicate that the STA is able to support reception of only a 2×106-tone MRU in a 20-MHz bandwidth and non-OFDMA, when the value of the Support for 2×106-tone or 2×106+26-tone MRU in 20 MHz BW subfield is two (e.g., 2, "10"), it may indicate that the STA is able to support reception of only a 2×106+26-tone MRU in a 20-MHz bandwidth and non-OFDMA, and when the value of the Support for 2×106-tone or 2×106+26-tone MRU in 20 MHz BW subfield is three (e.g., 3, "11"), it may indicate that the STA is able to support reception of both a 2×106-tone MRU and a 2×106+26-tone MRU in a 20-MHz bandwidth and non-OFDMA.

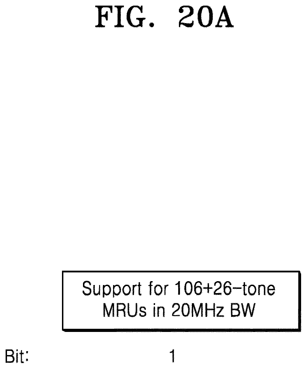

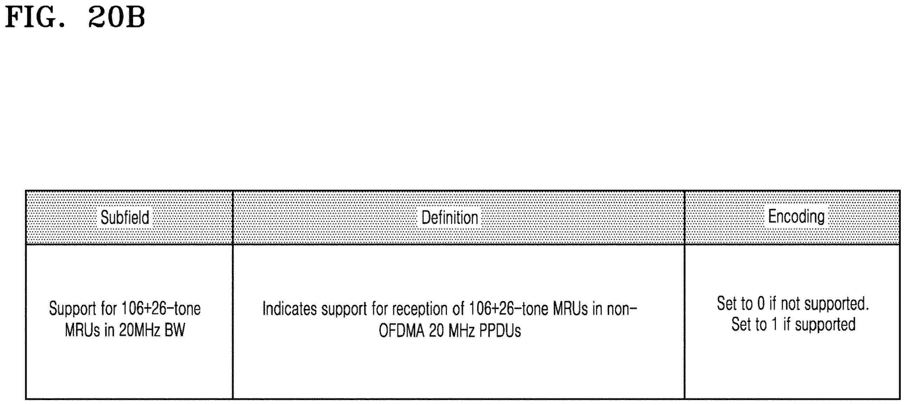

FIG. 20A is a diagram depicting a detailed implementation example of the Support MRU in 20 MHz BW subfield of FIG. 16B, according to an embodiment. FIG. 20B is a diagram illustrating the implementation example of FIG. 20A, according to an embodiment.

Referring to FIG. 20A, the Support MRU in 20 MHz BW subfield may be implemented as a 1-bit Support for 106+26-tone MRU in 20 MHz BW subfield to indicate whether the STA may support an upper-frequency 106+26-tone MRU (or a lower-frequency 106+26-tone MRU) in a PPDU according to a particular configuration.

Further referring to FIG. 20B, when the value of the Support for 106+26-tone MRU in 20 MHz BW subfield is zero (e.g., 0, "0"), it may indicate that the STA is unable to support reception of an upper-frequency 106+26-tone MRU (or a lower-frequency 106+26-tone MRU) in a 20-MHz bandwidth and non-OFDMA, and when the value of the Support for 106+26-tone MRU in 20 MHz BW subfield is one (e.g., 1, "1"), it may indicate that the STA is able to support reception of an upper-frequency 106+26-tone MRU (or a lower-frequency 106+26-tone MRU) in a 20-MHz bandwidth and non-OFDMA.

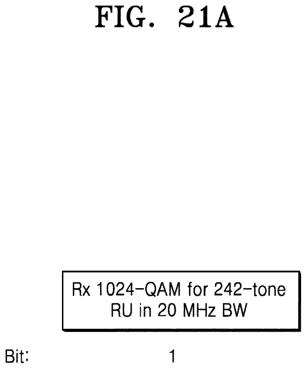

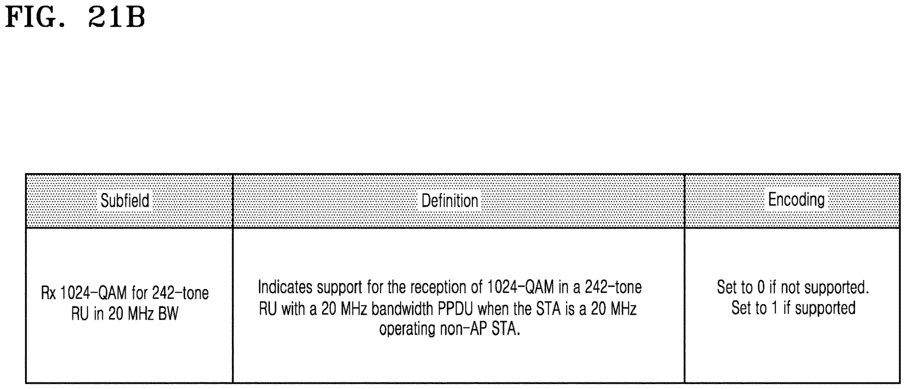

FIG. 21A is a diagram depicting a detailed implementation example of the Support MRU in 20 MHz BW subfield of FIG. 16B, according to an embodiment. FIG. 21B is a diagram illustrating the implementation example of FIG. 21A, according to an embodiment.

Referring to FIG. 21A, the Support MRU in 20 MHz BW subfield may be implemented as a 1-bit Rx 1024-QAM for 242-tone RU in 20 MHz BW subfield to indicate whether the STA may support data reception according to 1024-QAM for a 242-tone RU. The Rx 1024-QAM for 242-tone RU in 20 MHz BW subfield may indirectly indicate whether an MRU is supportable in a PPDU according to a particular configuration.

Referring to FIG. 21B, when the value of the Rx 1024-QAM for 242-tone RU in 20 MHz BW subfield is zero (e.g., 0, "0"), it may indicate that the STA operating as a non-AP in a 20-MHz bandwidth is unable to perform data reception according to 1024-QAM for a 242-tone RU. This may indicate that the STA may be able to (and/or may need to) support the MRU in the PPDU according to the particular configuration. When the value of the Rx 1024-QAM for 242-tone RU in 20 MHz BW subfield is one (e.g., 1, "1"), it may indicate that the STA operating as a non-AP in a 20-MHz bandwidth is able to perform data reception according to 1024-QAM for a 242-tone RU. That is, that the STA is able to perform data reception according to 1024-QAM for a 242-tone RU may indicate that the performance of a DC notch filter of the STA exceeds a filtering threshold and/or that the performance of the STA to recover data lost due to DC filtering exceeds a recovery threshold, and thus, allocation of an MRU to the STA according to an embodiment may be unnecessary. Accordingly, this may indicate that the STA may be unable to (or may not need to) support the MRU in the PPDU according to the particular configuration.

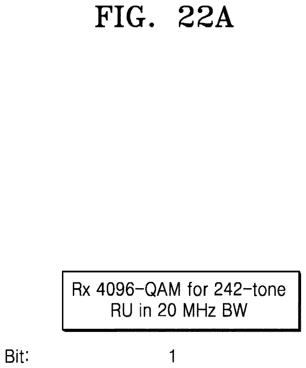

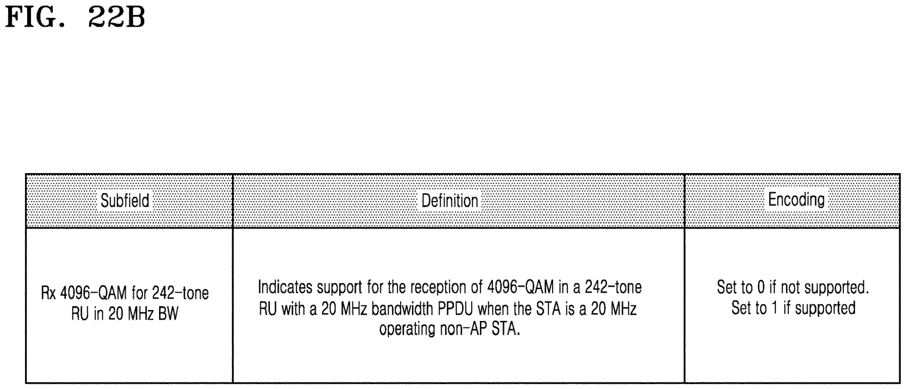

FIG. 22A is a diagram depicting a detailed implementation example of the Support MRU in 20 MHz BW subfield of FIG. 16B, according to an embodiment. FIG. 22B is a diagram illustrating the implementation example of FIG. 22A, according to an embodiment.

Referring to FIG. 22A, the Support MRU in 20 MHz BW subfield may be implemented as a 1-bit Rx 4096-QAM for 242-tone RU in 20 MHz BW subfield to indicate whether the STA may support data reception according to 4096-QAM for a 242-tone RU. The Rx 4096-QAM for 242-tone RU in 20 MHz BW subfield may indirectly indicate whether an MRU is supportable in a PPDU according to a particular configuration.

Referring to FIG. 22B, when the value of the Rx 4096-QAM for 242-tone RU in 20 MHz BW subfield is zero (e.g., 0, "0"), it may indicate that the STA operating as a non-AP in a 20-MHz bandwidth is unable to perform data reception according to 4096-QAM for a 242-tone RU. This may indicate that the STA may be able to (or may need to) support the MRU in the PPDU according to the particular configuration. When the value of the Rx 4096-QAM for 242-tone RU in 20 MHz BW subfield is one (e.g., 1, "1"), it may indicate that the STA operating as a non-AP in a 20-MHz bandwidth is able to perform data reception according to 4096-QAM for a 242-tone RU. That is, that the STA may be able to perform data reception according to 4096-QAM for a 242-tone RU may indicate that the performance of a DC notch filter of the STA is exceeds the filtering threshold and/or that the performance of the STA to recover data lost due to DC filtering exceeds the recovery threshold, and thus, allocation of an MRU to the STA according to an embodiment may be unnecessary. Accordingly, this may indicate that the STA may be unable to (or may not need to) support the MRU in the PPDU according to the particular configuration.

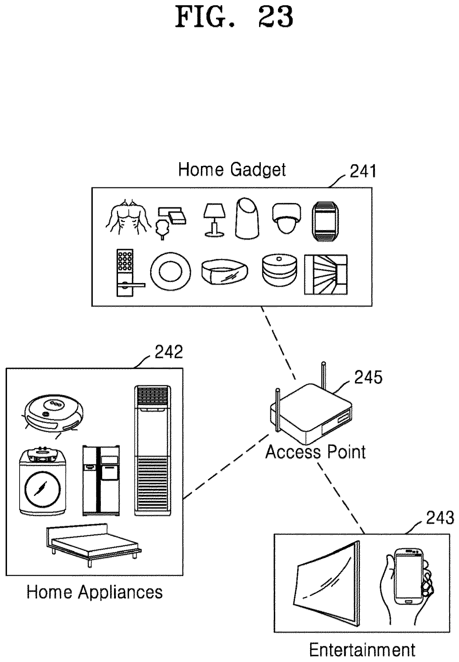

FIG. 23 is a diagram illustrating examples of a device for wireless communication, according to an embodiment. Referring to FIG. 23, an Intemet-of-Things (IoT) network system is illustrated. The IoT network system may include home gadgets 241, home appliances 242, entertainment devices 243, and an AP 245.

In some embodiments, as described above with reference to the drawings, a transmitting device for wireless communication of FIG. 23 may allocate, to another device, an MRU to replace a single RU in a specific communication environment, and transmit, to a receiving device, a PPDU including a field effectively indicating the allocation. Alternatively or additionally, the receiving device may accurately identify, from the field included in the PPDU, whether the MRU is allocated, and decode the PPDU based on a result of the identifying, thereby improving communication performance.

While embodiments of the present disclosure have been particularly shown and described, it is to be understood that various changes in form and details may be made therein without departing from the scope of invention as defined by the claims.

## Claims

1. A wireless communication method of a first device, the wireless communication method comprising:
receiving, from a second device through a channel having a bandwidth of 20 MHz, a physical layer protocol data unit, PPDU, based on a non-orthogonal frequency-division multiple access, non-OFDMA;
based on values of a plurality of fields being related to resource allocation of the channel and included in a signal field of a preamble included in the PPDU, identifying whether a multi-resource unit, MRU, to replace a resource unit, RU, comprising a 242-tone is allocated to the first device; and
based on a result of the identifying, decoding a payload included in the PPDU.

2. The wireless communication method of claim 1, wherein the plurality of fields comprise a bandwidth field, a PPDU type and compression mode field, and a punctured channel information field.

3. The wireless communication method of claim 2, wherein the identifying comprises:
identifying, based on a value of the bandwidth field, that the bandwidth of the channel is 20 MHz;
identifying, based on a value of the PPDU type and compression mode field, that the PPDU is based on non-OFDMA; and
identifying, based on a value of the punctured channel information field, whether at least one of the RU comprising the 242-tone and the MRU has been allocated to the first device.

4. The wireless communication method of claim 3, wherein the identifying further comprises:
based on the value of the punctured channel information field being a first value, identifying that the RU comprising the 242-tone is allocated to the first device; and
based on the value of the punctured channel information field being a second value, identifying that the MRU is allocated to the first device.

5. The wireless communication method of any one of claims 1 to 4, wherein the MRU comprises a 2×106-tone.

6. The wireless communication method of any one of claims 1 to 5, wherein the MRU comprises a 2×106+26-tone.

7. The wireless communication method of any one of claims 1 to 6, wherein the MRU is any one of a first MRU comprising 2×106-tone and a second MRU comprising 2×106+26-tone.

8. The wireless communication method of claim 7, wherein the identifying comprises:
based on a value of a punctured channel information field being a first value, identifying that the RU comprising the 242-tone is allocated to the first device;
based on the value of the punctured channel information field being a second value, identifying that the first MRU is allocated to the first device; and
based on the value of the punctured channel information field being a third value, identifying that the second MRU is allocated to the first device.

9. The wireless communication method of any one of claims 1 to 8, wherein the MRU comprises an upper-frequency 106+26-tone.

10. The wireless communication method of any one of claims 1 to 9, further comprising:
transmitting, to the second device, capability information of the first device indicating whether the MRU is supported.

11. The wireless communication method of claim 10, wherein the PPDU is generated based on the capability information of the first device.

12. The wireless communication method of any one of claims 1 to 11, further comprising:
transmitting, to the second device, capability information of the first device indicating whether reception of a modulation scheme for the RU comprising the 242-tone in the bandwidth of 20 MHz is supported.

13. The wireless communication method of claim 12, wherein the modulation scheme is any one of a 1024-QAM and a 4096-QAM.

14. A wireless communication method of a second device for communicating with a first device, the wireless communication method comprising:
allocating, to the first device, a first MRU to replace a resource unit (RU) comprising a 242-tone;
generating a field indicating that the first MRU is allocated to the first device; and
transmitting, to the first device through a channel having a bandwidth of 20 megahertz (MHz), a PPDU including the field, based on a non-OFDMA.

15. The wireless communication method of claim 14, wherein the field is a punctured channel information field.
